(19) Europäisches Patentamt
European Patent Office
Office européen des brevets

(11) **EP 3 760 659 A1**

(12) **EUROPÄISCHE PATENTANMELDUNG**

(43) Veröffentlichungstag:
**06.01.2021 Patentblatt 2021/01**

(51) Int Cl.:
*C08G 18/48* (2006.01)     *C08G 18/50* (2006.01)
*C08G 18/63* (2006.01)     *C08G 18/76* (2006.01)
*C08G 65/26* (2006.01)     *C08G 18/40* (2006.01)

(21) Anmeldenummer: **19183588.3**

(22) Anmeldetag: **01.07.2019**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **AMINGESTARTETE POLYOLE ALS EINBAUBARE KATALYSATOREN IM HR-SCHAUM**

(57)     Die vorliegende Erfindung betrifft ein Verfahren zur Herstellung eines aminbasierten Polyols durch Umsetzung eines tertiären Amins mit verschiedenen Epoxiden in mehreren Schritten. Des Weiteren betrifft die Erfindung das durch dieses Verfahren erhaltene aminbasierte Polyol und die Verwendung des aminbasierten Polyols bei der Herstellung von Polyurethanen, wobei die Polyurethane bevorzugt auf der Basis von Toluylendiisocyanat (TDI) synthetisiert werden und es sich bevorzugt um Formschäume handelt.

Abbildung 1

EP 3 760 659 A1

**Beschreibung**

Die vorliegende Erfindung betrifft ein Verfahren zur Herstellung eines aminbasierten Polyols durch Umsetzung eines tertiären Amins mit verschiedenen Epoxiden in mehreren Schritten. Des Weiteren betrifft die Erfindung das durch dieses Verfahren erhaltene aminbasierte Polyol und die Verwendung des aminbasierten Polyols bei der Herstellung von Polyurethanen, wobei die Polyurethane bevorzugt auf der Basis von Toluylendiisocyanat (TDI) synthetisiert werden und es sich bevorzugt um Formschäume handelt.

Die Herstellung von Polyurethanen durch Umsetzung einer Reaktionsmischung von Polyisocyanaten mit Polyolen, Katalysatoren und gegebenenfalls mit Treibmitteln, wie Wasser, Zusatzstoffen, und/oder Hilfsmitteln ist allgemein bekannt. Polyurethane können unter anderem als Hartschaum oder als Weichschaum hergestellt werden. Unter Polyurethan-Weichschaum wird Polyurethan-Schaum verstanden, der einer Druckbeanspruchung einen geringen Widerstand entgegensetzt, der offenzellig, luftdurchlässig und reversibel verformbar ist. Polyurethan-Weichschaum kann unter anderem hergestellt werden, indem die Reaktionsmischung in einer Form polymerisiert wird, man spricht dann von Formschäumen. Dabei kann die Reaktionsmischung entweder mit oder ohne äußere Wärmezufuhr nach der Verschäumung aushärten, abhängig von dem Verfahren spricht man von Heißschaum oder Kaltschaum.

TDI-basierter Polyurethan-Weichschaum, insbesondere Kaltschaum, ist ein wesentlicher Bestandteil von Polsterungen, beispielsweise Sitzpolstern für die Automobilindustrie. Polyurethan-Schaum, der als Polsterung verwendet wird, soll eine angenehm weiche Haptik und gute Dauergebrauchseigenschaften aufweisen. Die Dauergebrauchseigenschaften werden insbesondere durch den Druckverformungsrest nach Einwirkung von Wärme und Feuchtigkeit auf den Schaum, die sog. Wärmefeuchtalterung, dargestellt. Des Weiteren sind insbesondere bei der Verwendung von Polyurethan-Weichschäumen als (Autositz-)Polstermaterial geringe Emissionen von flüchtigen Substanzen von Bedeutung. Zur Bestimmung von Emissionen wird üblicherweise der VDA 278 Test herangezogen. Beim VDA 278 Test handelt es sich um ein Thermodesorptionsverfahren zur Ermittlung von organischen Emissionen aus nichtmetallischen Werkstoffen bei erhöhten Temperaturen. Dabei werden die Proben aufgeheizt und die emittierten Substanzen mit einem Inertgasstrom in einer Kühlfalle kryofokussiert und danach analysiert. Um den Anteil an leichtflüchtigen organischen Substanzen (VOC) zu ermitteln, wird die Probe auf 90 °C aufgeheizt, bei der Ermittlung der VOC können auch leichtflüchtige Amine erfasst werden. Der Zielwert aller Amine im VOC ist $\leq$ 50 mg/kg.

Allerdings muss nicht nur der Polyurethan-Schaum bestimmten Anforderungen genügen, sondern auch seine Herstellung. Gewünscht wird ein wirtschaftliches und sicheres Herstellungsverfahren. Die Wirtschaftlichkeit des Herstellungsverfahrens hängt unter anderem von dem Aufschäumverhalten der Reaktionsmischung für den Polyurethan-Schaum ab. Der Zeitraum vom Beginn der Vermischung der Reaktionsmischung bis zum Ende des Steigvorgangs des Polyurethan-Schaums wird Steigzeit genannt. Idealerweise ist die Steigzeit nur ausreichend lange um die gesamte Form zu füllen, aber ansonsten kurz, d.h. die Reaktionsmischung schäumt schnell auf und muss beispielsweise bei einem Formschaumverfahren nur einen relativ kurzen Zeitraum in der Form verbleiben, bevor das weitgehend ausgehärtete Kaltschaumteil aus der Form gelöst werden kann.

Die Geschwindigkeit der Schaumbildung kann durch Katalysatoren beeinflusst werden. Insbesondere bei der Herstellung von Polyurethan-Kaltschaum muss jedoch die Katalyse von Treib- und Vernetzungsreaktion sorgfältig aufeinander abgestimmt sein, da ansonsten ein instabiler Schaum erhalten wird, der zum Kollabieren neigt oder ein zu geschlossenzelliges Formteil resultiert. Bei der Herstellung von Polyurethan-Weichschaum im Kaltschaumverfahren werden üblicherweise tertiäre Amine als Katalysatoren eingesetzt (Oertel (Hrsg.), Kunststoff Handbuch, Polyurethane, 3. Auflage, Kapitel 5.3). Derartige Aminkatalysatoren haben jedoch den Nachteil, dass sie aus dem Polyurethan-Weichschaum ausgasen und unerwünschte Emissionen hervorrufen. Um diese Emissionen zu vermeiden, wurden niedermolekulare Katalysatoren entwickelt, die in die Struktur des Polyurethans integriert werden. Diese sog. einbaubaren Katalysatoren haben beispielsweise Hydroxylgruppen, die mit dem Isocyanat reagieren. Die Art und Anzahl der Hydroxylgruppen eines solchen Katalysators kann auch Einfluss auf die Steigzeit eines Polyurethan-Schaums haben. Herkömmliche niedermolekulare einbaubare Katalysatoren beeinflussen auch die Eigenschaften des Polyurethan-Weichschaumstoffs, insbesondere führen sie zu schlechten Wärmefeuchtalterungswerten von Polyurethan-Weichschaumstoffen, dies gilt insbesondere für TDI-basierte Polyurethan-Weichschaumstoffe.

WO 2015/153316 offenbart Startermoleküle für die Herstellung von Polyurethanschäumen die aus einem tertiärem Amin und einem mehrwertigen Alkohol, Glycidylether oder Epoxid synthetisiert werden. Die tertiären Amine weisen zwei Substituenten auf, die jeweils entweder endständige Hydroxylgruppen oder primäre Amine aufweisen. Die Druckschrift beschäftigt sich nicht mit einem möglichen Absacken oder Kollabieren von Polyurethanschäumen.

EP 1 878 492 B1, EP 1 977 825 B1 und die EP 1 977 826 B1 beziehen sich auf Katalysatoren aus Diaminoethylethern, die mit Ether- oder Estergruppen substituiert sind, für die Herstellung von Polyurethan-Gelen oder -Schäumen. Es werden Katalysatoren offenbart, die durch Umsetzung von N,N,N'-trimethyl-bis-(aminoethyl)-ether mit Glycidyl-Ethern oder Glycidyl-Estern gewonnen werden. Die Druckschriften offenbaren keine Emissionswerte für flüchtige Amine des Polyurethanschaums.

EP 2 104 696 bezieht sich auf die Herstellung von Polyurethanprodukten, wobei als Katalysator eine Mischung aus aminbasierten Polyolen und Harnstoff verwendet wird. Die Katalysatormischung soll zu einer verringerten Emission von flüchtigen Substanzen führen und gleichzeitig gute katalytische Eigenschaften aufweisen.

Es besteht ein Bedarf an einbaubaren Katalysatoren, die das Aufschäumverhalten der Zusammensetzungen für den Erhalt eines Polyurethan-Weichschaums und die mechanischen Eigenschaften des Polyurethan-Weichschaums nicht beeinträchtigen, insbesondere die Wärmefeuchtalterung nicht verschlechtern. Dabei sollte der erhaltene Polyurethan-Weichschaum

eine Kerndichte nach DIN EN ISO 845 vom 10/2015 im Bereich von 25 bis 90 kg/m$^3$,

eine Stauchhärte nach DIN EN ISO 3386-1 vom 10/2015 im Bereich von 2 bis 12 kPa,

eine Zugfestigkeit nach DIN EN ISO 1798 vom 04/2008 im Bereich von 100 bis 250 kPa und

eine Bruchdehnung nach DIN EN ISO 1798 vom 04/2008 im Bereich von 100 bis 250 % aufweisen.

Außerdem besteht ein Bedarf an Polyurethan-Weichschäumen, die vergleichsweise geringe Emissionen an leichtflüchtigen organischen Substanzen nach der Prüfnorm VDA 278 aufweisen.

Die Aufgabe der vorliegenden Erfindung war die Bereitstellung eines einbaubaren Katalysators für die Herstellung von Polyurethan-Weichschaum, welcher das Aufschäumverhalten eines Polyurethan-Weichschaums nicht verzögert und nicht zu einem Absacken des erhaltenen Polyurethan-Weichschaums nach dem Aufschäumen führt. Des Weiteren soll ein Polyurethan-Weichschaumstoff enthaltend das aminbasierte Polyol niedrige Emissionen, insbesondere von niedermolekularen Aminen nach der Prüfnorm VDA 278, und gute Wärmefeuchtalterungseigenschaften aufweisen. Dabei soll unter guten Wärmefeuchtalterungseigenschaften ein Humid Aged Load Loss (HALL-Test) von -10% bis 20% und ein Druckverformungsrest nach Feuchtwärme 50%/22h/70°C (HACS-Test) Test von 0% bis 40% verstanden werden. Insbesondere soll ein TDI-basierter Weichschaum enthaltend das erfindungsgemäße Polyol die zuvor genannten Eigenschaften aufweisen.

Gelöst wurde diese Aufgabe durch ein Verfahren zur Herstellung eines aminbasierten Polyols zur Herstellung von Polyurethan-Weichschaumstoff umfassend die folgenden Schritte

a) Umsetzung eines Amins der allgemeinen Formel (I)

$$R^1{}_2N - (CH_2)_n - NH_2 \qquad (I)$$

wobei $R^1$ jeweils ein unterschiedlicher oder gleicher $C_1$ bis $C_{10}$ Alkylrest und n eine ganze Zahl von 1 bis 10 ist, mit einem Epoxid A,
wobei das Epoxid A und das Amin in einem molaren Verhältnis von 10 bis 50 zu 1 eingesetzt werden, und die Umsetzung so lange erfolgt, bis mindestens 90 Gew.-% des eingesetzten Epoxids A umgesetzt sind, so dass ein Zwischenprodukt erhalten wird,

b) Umsetzung des Zwischenprodukts mit einem Epoxid B, welches von Epoxid A verschieden ist, wobei Epoxid B in einer Menge eingesetzt wird, die einem molaren Verhältnis des Epoxids zu dem Amin von 8 bis 40 zu 1 entspricht, und die Umsetzung so lange erfolgt, bis mindestens 90 Gew.-% des eingesetzten Epoxids B umgesetzt sind, so dass das aminbasierte Polyol erhalten wird.

Dabei wurde überraschend gefunden, dass die erfindungsgemäßen aminbasierten Polyole zu einem vorteilhaften Aufschäumverhalten der Reaktionsmischung führen und der erhaltene Polyurethan-Weichschaum nach dem Aufschäumen nicht absackt. Darüber hinaus wiesen die Polyurethan-Weichschaumstoffe gute Wärmefeuchtalterungswerte und niedrige Emissionen nach der Prüfnorm VDA 278 auf.

Das erfindungsgemäße aminbasierte Polyol wird durch einen Polymerisationsprozess erhalten, bei dem verschiedene Epoxide nacheinander mit einem Amin der allgemeinen Formel (I)

$$R^1{}_2N-(CH_2)_n-NH_2 \qquad (I)$$

umgesetzt werden. Bevorzugt ist in dem Amin der allgemeinen Formel (I) $R^1$ jeweils der gleiche $C_1$ bis $C_3$ Alkylrest und n eine ganze Zahl von 2 bis 6 ist, bevorzugter ist $R^1$ jeweils ein Methylrest. In einer bevorzugten Ausführungsform ist das Amin der allgemeinen Formel (I) 3-Dimethylamino-1-propylamin.

In Schritt a) des erfindungsgemäßen Verfahrens wird das Amin der allgemeinen Formel (I) mit einem Epoxid A umgesetzt, wobei das Epoxid A bevorzugt Propylenoxid ist. Bevorzugt werden das Epoxid und das Amin der allgemeinen Formel (I) in einem molaren Verhältnis von 20 bis 50 zu 1, bevorzugter 30 bis 50 zu 1 umgesetzt. Die Umsetzung erfolgt so lange, bis mindestens 90 Gew.-%, bevorzugt mindestens 95 Gew.-%, bevorzugter mindestens 98 Gew.-%, des eingesetzten Epoxids A umgesetzt sind und ein Zwischenprodukt erhalten wird.

In Schritt b) des erfindungsgemäßen Verfahrens wird das in Schritt a) erhaltene Zwischenprodukt mit einem Epoxid B umgesetzt, wobei das Epoxid B bevorzugt Ethylenoxid ist. Das Epoxid und das Zwischenprodukt werden in einem molaren Verhältnis von 8 bis 40 zu 1, bevorzugt in einem molaren Verhältnis von 8 bis 35 zu 1, bevorzugter 8 bis 30 zu 1 umgesetzt. Die Umsetzung erfolgt so lange, bis mindestens 90 Gew.-%, bevorzugt mindestens 95 Gew.-%, bevorzugter mindestens 98 Gew.-%, des eingesetzten Epoxids B umgesetzt sind.

Die Umsetzungsrate des jeweiligen Epoxids kann bei der Umsetzung von bei Reaktionstemperatur gasförmigen Edukten anhand der Druckabfallgeschwindigkeit im geschlossenen Reaktionsgefäß beurteilt werden: Fällt nach Beendigung der Dosierung eines Epoxidblocks während der Nachreaktionsphase der Druck mit einer Rate von kleiner als 30 mbar / h, kann sicher davon ausgegangen werden, dass mindestens 90 % des eingesetzten Epoxides umgesetzt sind. Wird in Schritt a) und/oder Schritt b) ein Katalysator eingesetzt, so ist es vorteilhaft, diesen durch Aufarbeitungsschritte, beispielsweise durch Neutralisation eines basischen Katalysators mit Säure und nachfolgende Abfiltration der entstandenen Salze, abzutrennen, bevor das aminbasierte Polyol Umsetzungsschritten zu Polyurethanschaumstoffen zugeführt wird.

In einer bevorzugten Ausführungsform ist das Epoxid A Propylenoxid und das Epoxid B Ethylenoxid. Bevorzugt erfolgt die Umsetzung in den Schritten a) und/oder b) in Anwesenheit eines Katalysators und/oder in den Schritten a) und/oder b) und/oder nach Beendigung von Schritt b) wird ein Antioxidans eingesetzt. Wird ein basischer Katalysator eingesetzt, so erfolgt der Zusatz eines Antioxidanz vorteilhafterweise erst nach seiner Neutralisation bzw. Abtrennung. Dabei gilt Schritt b) als beendet, wenn mindestens 90 Gew.-% des eingesetztes Epoxids B umgesetzt sind.

Bei dem oben beschriebenen Polymerisationsprozess zur Herstellung des erfindungsgemäßen aminbasierten Polyols werden die beiden Wasserstoffatome des tertiären Amins jeweils durch eine Polyolkette ersetzt. Es ist jedoch aufgrund der Kinetik des Polymerisationsprozesses nicht anzunehmen, dass die Polyolketten jeweils den gleichen Aufbau, also die gleiche Länge, bzw. den gleichen Polymerisationsgrad aufweisen. Ferner können auch Umlagerungsreaktionen an den Stickstoffatomen zu intra- und intermolekularen Umverteilungen der an diese Atome gebundenen Reste führen. Aus diesem Grund kann die genaue Struktur des erfindungsgemäßen aminbasierten Polyols nicht gezeigt werden. Theoretisch weist das aminbasierte Polyol die allgemeine Formel (II) auf

$$R^1_2N\text{-}(CH_2)_n\text{-}N(\text{-}R^2\text{-}H)(\text{-}R^3\text{-}H) \qquad (II)$$

wobei

$R^1$ jeweils ein unterschiedlicher oder gleicher, unsubstituierter $C_1$ bis $C_{10}$ Alkylrest ist,
n eine ganze Zahl von 1 bis 10 ist, und
$-R^2$ und $-R^3$ jeweils aus Struktureinheiten bestehen, die auf unterschiedliche Epoxide zurückzuführen sind, bevorzugt auf Propylenoxid und Ethylenoxid. Dabei sind $-R^2$- und $-R^3$- bevorzugt jeweils Struktureinheiten der folgenden Formel (III)

$$\text{- ([PO]-[EO]) -H} \qquad (III)$$

wobei

[PO] ein Polyetherfragment ist, welches auf ein Epoxid A zurückzuführen ist, bevorzugt im Wesentlichen auf Propylenoxid, und
[EO] bevorzugt ein Polyolfragment ist, welches auf ein Epoxid B, das sich von Epoxid A unterscheidet, zurückzuführen ist, bevorzugt im Wesentlichen auf Ethylenoxid.

Der Isocyanat-Index (auch Kennzahl) gibt das prozentuale Verhältnis der tatsächlich eingesetzten Isocyanat-Menge zur stöchiometrischen, d.h. für die Umsetzung der OH-Äquivalente berechnete Menge an Isocyanat-Gruppen (NCO-Menge) an:

$$\text{Kennzahl} = [\text{Isocyanat-Menge eingesetzt}) / (\text{Isocyanat-Menge berechnet})] \bullet 100$$

Des Weiteren betrifft die Erfindung das aminbasierte Polyol, welches durch das erfindungsgemäße Verfahren erhalten wird oder erhältlich ist. Außerdem betrifft die Erfindung die Verwendung des aminbasierten Polyols bei der Herstellung von Polyurethan-Weichschaumstoff, insbesondere bei der Herstellung in einem Kaltschaumverfahren. Bevorzugt werden bei der Verwendung des aminbasierten Polyols Möbelpolsterungen, Textileinlagen, Matratzen, Automobilsitze, Kopfstützen, Armlehnen, Schwämme, Dachhimmel, Türseitenverkleidungen, Sitzauflagen oder Bauelemente hergestellt.

Darüber hinaus betrifft die Erfindung einen Polyurethan-Weichschaumstoff, erhalten durch oder erhältlich durch Umsetzung einer Zusammensetzung enthaltend oder bestehend aus

- einer Isocyanat-reaktiven Komponente **A1** enthaltend oder bestehend aus Verbindungen mit gegenüber Isocyanten reaktionsfähigen Wasserstoffatomen und/oder einem gefüllten Polyol;
- einer weiteren Isocyanat-reaktiven Komponente **A2,** die von **A1** verschieden ist;
- einer Komponente **A3** enthaltend oder bestehend aus mindestens einem Treibmittel;
- optional einer Komponente **A4** enthaltend oder bestehend aus Hilfs- und Zusatzstoffen; sowie
- einer Komponente **B** enthaltend oder bestehend aus mindestens einem aromatischen Polyisocyanat; bevorzugt Toluylendiisocyanat;
- einer Komponente **C** enthaltend oder bestehend aus einem aminbasierten Polyol, erhalten oder erhältlich durch das oben beschriebene erfindungsgemäße Verfahren,
wobei die Umsetzung bei einem Isocyanat-Index von 70 bis 120 erfolgt.

Bevorzugt enthält oder besteht die Zusammensetzung aus

- von 65 bis 95 Gew.-Teilen der Komponente **A1**, wobei Komponente **A1** bevorzugt 5 bis 60 Gew.-Teile, bezogen auf die Masse der Komponente **A1** und **A2,** eines gefüllten Polyols enthält,
- von 0,1 bis 5 Gew.-Teilen der Komponente **A2;**
- von 1 bis 4,5 Gew.-Teilen der Komponente **A3;**
- optional von 0,1 bis 5 Gew.-Teilen der Komponente **A4;** sowie
- von 20 bis 70 Gew.-Teilen der Komponente **B,** wobei Komponente **B** insbesondere Toluylendiisocyanat enthält oder daraus besteht;
- von 5 bis 35 Gew.-Teile der Komponente **C,**
wobei sich die Gewichtsteile der Komponenten A1 und C zu 100 addieren und sich die Angaben für die Gewichtsteile der Komponenten A2, A3, A4 und B auf die Summe der Komponenten A1 und C beziehen.

Neben den bevorzugten Polyetherpolyolen können in der Polyolformulierung zur Herstellung der Polyurethan-Weichschaumstoffe weitere hydroxylgruppenhaltige Verbindungen (Polyole) eingesetzt werden. Diese an sich bekannten Polyole werden z.B. ausführlich beschrieben G. Oertel (Hrsg.): "Kunststoffhandbuch, Band 7, Polyurethane", Hanser Verlag, München 1993, S. 57-75.

Bevorzugt eingesetzte Polyole sind Polyetherpolyole (insbesondere Poly(oxyalkylen)polyole) und Polyesterpolyole, wobei die eingesetzten Polyole bevorzugte eine OH-Zahl nach DIN 53240 im Bereich von 10 bis 40, bevorzugter im Bereich von 15 bis 35, aufweisen.

Die Herstellung der Polyetherpolyole erfolgt nach bekannten Methoden, vorzugsweise durch basenkatalysierte Polyaddition von Alkylenoxiden an polyfunktionelle, aktive Wasserstoffatome aufweisende Starterverbindungen, wie z.B. Alkohole oder Amine. Beispielhaft seien genannt: Ethylenglykol, Diethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke, Wasser, Methylamin, Ethylamin, Propylamin, Butylamin, Anilin, Benzylamin, o- und p-Toluidin, $\alpha,\beta$-Naphthylamin, Ammoniak, Ethylendiamin, Propylendiamin, 1,4-Butylendiamin, 1,2-, 1,3-, 1,4-, 1,5- und/oder 1,6-Hexamethylendiamin, o-, m-, und p-Phenylendiamin, 2,4-, 2,6-Toluylendiamin, 2,2'-, 2,4- und 4,4'-Diaminodiphenylmethan und Diethylendiamin. Bevorzugt weist das gefüllte Polyol der Komponente A1 eine OH-Zahl nach DIN 53240 im Bereich von 10 bis 40, bevorzugt im Bereich von 15 bis 35, bevorzugter im Bereich von 20 bis 30 auf.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann nur mit einem monomeren Epoxid durchgeführt werden, aber auch statistisch oder auch blockweise mit zwei oder drei unterschiedlichen monomeren Epoxiden erfolgen.

Verfahren zur Herstellung solcher Polyetherpolyole werden in "Kunststoffhandbuch, Band 7, Polyurethane", in "Reaction Polymers" beschrieben.

Die Addition von Alkylenoxiden an die Starterverbindungen kann beispielsweise auch DMCkatalysiert erfolgen.

Neben diesen "einfachen" Polyetherpolyolen können auch Polyethercarbonatpolyole im erfindungsgemäßen Verfahren eingesetzt werden. Polyethercarbonatpolyole können z.B. durch katalytische Umsetzung von Ethylenoxid und Propylenoxid, ggf. weiteren Alkylenoxiden, und Kohlendioxid in Anwesenheit von H-funktionellen Startersubstanzen erhalten werden (siehe z.B. EPA 2046861).

Methoden zur Herstellung von Polyesterpolyolen sind ebenfalls gut bekannt und z.B. beschrieben in den beiden oben genannten Literaturstellen ("Kunststoffhandbuch, Band 7, Polyurethane", "Reaction Polymers"). Die Polyesterpolyole werden i.a. durch Polykondensation von mehrfunktionellen Carbonsäuren oder deren Derivaten, wie z.B. Säurechloriden oder -anhydriden, mit mehrfunktionellen Hydroxylverbindungen hergestellt.

Als mehrfunktionelle Carbonsäuren können beispielsweise verwendet werden: Adipinsäure, Phthalsäure, Isophthalsäure, Terephthalsäure, Oxalsäure, Bernsteinsäure, Glutarsäure, Azelainsäure, Sebacinsäure, Fumarsäure oder Maleinsäure.

Als mehrfunktionelle Hydroxylverbindungen können beispielsweise verwendet werden: Ethylenglykol, Diethylenglykol, Triethylenglykol, 1,2-Propylenglykol, Dipropylenglykol, 1,3-Butandiol, 1,4-Butandiol, 1,6-Hexandiol, 1,12-Dodecandiol, Neopentylglykol, Trimethylolpropan, Triethylolpropan oder Glycerin.

Die Herstellung der Polyesterpolyole kann weiterhin auch durch Ringöffnungspolymerisation von Lactonen (z.B. Caprolacton) mit Diolen und/oder Triolen als Starter erfolgen.

Die oben beschriebenen Polyetherpolyole, Polyethercarbonatpoylole und Polyesterpolyole können auch unter Mitverwendung von füllstoffhaltigen Polyolen wie z.B. Polymerpolyolen (enthaltend Styrol-Acrylnitril-Copolymerisate in dispergierter Form, sog. SAN-modifizierte Polyole) oder Polyharnstoff-Dispersion-Polyolen etc. für die Herstellung der Polyurethan-Weichschäume eingesetzt werden. Bevorzugt werden SAN-modifizierte Polyole eingesetzt, besonders bevorzugt solche mit einem Feststoffgehalt von 20 bis 50 Gew.-% insbesondere 35 bis 45 Gew.-% bezogen auf das modifizierte Polyol. Bevorzugt weist gefüllte Polyol eine OH-Zahl nach DIN 53240 im Bereich von 10 bis 40, bevorzugt im Bereich von 15 bis 35, bevorzugter im Bereich von 20 bis 30 auf.

Zusätzlich kann bei der Herstellung der erfindungsgemäßen Polyurethane eine Vernetzerkomponente zugesetzt werden. Als derartige Vernetzer sind z.B. Diethanolamin, Triethanolamin, Glycerin, Trimethylolpropan (TMP), Addukte von solchen Vernetzerverbindungen mit Ethylenoxid und/oder Propylenoxid mit einer OH-Zahl < 1.000 oder auch Glykole mit einem zahlenmittleren Molekulargewicht $\leq$ 1.000 brauchbar. Bevorzugt sind Triethanolamin, Glycerin, TMP oder niedrige EO- und/oder PO-Addukte hiervon. Besonders bevorzugt ist Diethanolamin.

Weiterhin können gegebenenfalls bekannte Hilfs-, Zusatz- und/oder Flammschutzmittel zugesetzt werden. Unter Hilfsstoffen werden dabei insbesondere an sich bekannte Katalysatoren und Stabilisatoren verstanden. Als Flammschutzmittel ist z.B. Melamin oder TCPP einsetzbar.

Als Katalysatoren werden bevorzugt eingesetzt: aliphatische tertiäre Amine (beispielsweise Triethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff und Derivate des Harnstoffs (wie beispielsweise Aminoalkylharnstoffe, siehe zum Beispiel EP-A 0 176 013, insbesondere (3-Dimethylaminopropylamin)-harnstoff). Es können einbaubare oder nicht einbaubare Katalysatoren eingesetzt werden. Besonders bevorzugt werden nicht-einbaubare Katalysatoren enthaltend Bis(2-dimethylaminoethyl)ether, beispielsweise vertrieben unter dem Handelsnamen Niax Catalyst A-400, und/oder 1,4-Diaza(2,2,2)bicyclooctan, beispielsweise vertrieben unter dem Handelsnamen DABCO 33-LV, eingesetzt.

Als Katalysatoren können auch Zinn(II)-Salze von Carbonsäuren eingesetzt werden, wobei vorzugsweise die jeweils zugrundeliegende Carbonsäure von 2 bis 20 Kohlenstofatome aufweist. Besonders bevorzugt sind das Zinn(II)-Salz der 2-Ethylhexansäure (d.h. Zinn(II)-(2-ethylhexanoat)), das Zinn(II)-Salz der 2-Butyloctansäure, das Zinn(II)-Salz der 2-Hexyldecansäure, das Zinn(II)-Salz der Neodecansäure, das Zinn(II)-Salz der Ölsäure, das Zinn(II)-Salz der Ricinolsäure und Zinn(II)laurat. Es können auch Zinn(IV)-Verbindungen, wie z.B. Dibutylzinnoxid, Dibutylzinndichlorid, Dibutylzinndiacetat, Dibutylzinndilaurat, Dibutylzinnmaleat oder Dioctylzinndiacetat als Katalysatoren eingesetzt werden. Selbstverständlich können alle genannten Katalysatoren auch als Gemische eingesetzt werden.

Weitere Vertreter von zu verwendenden Katalysatoren sowie Einzelheiten über die Wirkungsweise der Katalysatoren sind im Vieweg und Höchtlen (Hrsg.): Kunststoff-Handbuch, Band VII, Carl-Hanser-Verlag, München 1966, S. 96 -102 beschrieben.

Die Katalysatoren werden bevorzugt in Mengen von etwa 0,001 bis 10 Gew.-%, bezogen auf die Gesamtmenge an Verbindungen mit mindestens zwei gegenüber Isocyanaten reaktionsfähigen Wasserstoffatomen, eingesetzt.

Weitere gegebenenfalls eingesetzte Zusatzstoffe sind oberflächenaktive Zusatzstoffe wie Emulgatoren und Schaumstabilisatoren. Als Emulgatoren kommen z.B. die Natriumsalze von Ricinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphtylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, zum Einsatz. Diese Verbindungen sind im allgemeinen so aufgebaut, dass ein Copolymerisat aus Ethylenoxid und Propylenoxid mit einem Polydimethylsiloxanrest verbunden ist. Von besonderem Interesse sind vielfach über Allophanatgruppen verzweigte Polysiloxan-Polyoxyalkylen-Copolymere gemäß DE-A 25 58 523.

Weitere mögliche Zusatzstoffe sind Reaktionsverzögerer, z.B. sauer reagierende Stoffe wie Salzsäure oder organische Säurehalogenide, ferner an sich bekannte Zellregler wie Paraffine oder Fettalkohole oder Dimethylpolysiloxane sowie an sich bekannte Pigmente oder Farbstoffe und Flammschutzmittel, z.B. Tris(2-chlorisopropyl)phosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind in Vieweg und Höchtlen (Hrsg.): Kunststoff-Handbuch, Band VII, Carl-Hanser-Verlag, München 1966, S. 103 - 113 beschrieben.

Als einzusetzende Treibmittelkomponente sind alle bei der Polyurethan-Schaumstoffherstellung bekannten Treibmittel verwendbar. Als organische Treibmittel kommen z.B. Aceton, Ethylacetat, Alkane, halogensubstituierte Alkane wie Methylenchlorid, als anorganische Treibmittel z.B. Luft oder $CO_2$ in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden. Besonders bevorzugt wird Wasser als chemisches Treibmittel verwendet. Weitere Beispiele für Treibmittel sowie Einzelheiten über die Verwendung, von Treibmitteln sind in Vieweg und Höchtlen (Hrsg.): Kunststoff-Handbuch, Band VII, Carl-Hanser-Verlag, München 1966, S. 108f, S. 453ff und S. 507ff beschrieben. Bevorzugt ist jedoch Wasser, bzw. $CO_2$, das alleinige Treibmittel.

Komponente B enthält bevorzugt die technisch leicht zugänglichen Polyisocyanate, z.B. das 2,4- und 2,6-Toluylendiisocyanat, sowie beliebige Gemische dieser Isomeren ("TDI"); oder Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise enthält oder besteht Komponente B aus 2,4- und/oder 2,6-Toluylendiisocyanat oder Mischungen daraus.

Durchführung des Verfahrens zur Herstellung von Polyurethanschaumstoffen

Die Herstellung von Schaumstoffen auf Isocyanatbasis ist an sich bekannt und z.B. in DE-A 1 694 142, DE-A 1 694 215 und DE-A 1 720 768 sowie im Kunststoff-Handbuch Band VII, Polyurethane, herausgegeben von Vieweg und Höchtlen, Carl Hanser Verlag München 1966, sowie in der Neuauflage dieses Buches, herausgegeben von G. Oertel, Carl Hanser Verlag München, Wien 1993, beschrieben.

Zur Durchführung des erfindungsgemäßen Verfahrens werden die Reaktionskomponenten nach dem an sich bekannten Einstufenverfahren, dem Prepolymerverfahren oder dem Semiprepolymerverfahren zur Umsetzung gebracht, wobei man sich vorzugsweise maschineller Einrichtungen bedient, wie sie in US 2 764 565 beschrieben werden.

Bei den erfindungsgemäßen Schaumstoffen handelt es sich um Formschaumstoffe. Die Herstellung der Schäume wird in geschlossenen Formen durchgeführt. Dabei wird das Reaktionsgemisch in eine Form eingetragen. Als Formmaterial kommt Metall, z.B. Aluminium, Stahl oder Kunststoff, z.B. Epoxidharz in Frage. In der Form schäumt das schaumfähige Reaktionsgemisch auf und bildet den Formkörper. Die Formverschäumung kann dabei so durchgeführt werden, dass das Formteil an seiner Oberfläche Zellstruktur aufweist. Sie kann aber auch so durchgeführt werden, dass das Formteil eine kompakte Haut und einen zelligen Kern aufweist. Erfindungsgemäß kann man in diesem Zusammenhang so vorgehen, dass man in die Form so viel schaumfähiges Reaktionsgemisch einträgt, dass der gebildete Schaumstoff die Form gerade ausfüllt. Man kann aber auch so arbeiten, dass man mehr schaumfähiges Reaktionsgemisch in die Form einträgt, als zur Ausfüllung des Forminneren mit Schaumstoff notwendig ist. Im letztgenannten Fall wird somit unter sog. Überpackung gearbeitet; eine derartige Verfahrensweise ist z. B. aus US 3 178 490 und US 3 182 104 bekannt.

Bei der Formverschäumung werden vielfach an sich bekannte "äußere Trennmittel" wie Siliconöle mitverwendet. Man kann aber auch sogenannte "innere Trennmittel", verwenden, gegebenenfalls im Gemisch mit äußeren Trennmitteln, wie dies beispielsweise aus DE-OS 21 21 670 und DE-OS 23 07 589 hervorgeht.

Bevorzugt weist der erfindungsgemäße Polyurethan-Weichschaum eine Emission von aliphatischen Aminen bei einer Messung nach VDA 278-Test von 2011, Aufheizung zur Ermittlung von VOC, von ≤ 10 mg/kg , bevorzugt ≤ 5 mg/kg, bevorzugter von ≤ 1 mg/kg, auf. In einer bevorzugten Ausführungsform weist der Polyurethan-Weichschaumstoff einen Druckverformungsrest nach Feuchtwärme 50%/22h/70°C nach DIN EN ISO 1856-2008 von 5 bis 25 %, bevorzugt von 0 bis 10 % auf. Des Weiteren weist der erfindungsgemäße Polyurethan-Weichschaumstoff ein Humid Aged Load Loss nach DIN EN ISO 3386-1 vom 10/2015 von -10 bis 20 % auf. In einer weiteren bevorzugten Ausführungsform weist der Polyurethan-Weichschaumstoff ein Humid Aged Compression set nach DIN EN 1856 von 2008 nach Dampfautoklavierung für 3h bei 105°C von 0 bis 40% auf.

In einer ersten Ausführungsform betrifft die Erfindung ein Verfahren zur Herstellung eines aminbasierten Polyols zur Herstellung von Polyurethan-Weichschaumstoff umfassend die folgenden Schritte:

a) Umsetzung eines Amins der allgemeinen Formel (I)

$$R^1_2N\text{-}(CH_2)_n\text{-}NH_2 \qquad (I)$$

wobei $R^1$ jeweils ein unterschiedlicher oder gleicher $C_1$ bis $C_{10}$ Alkylrest und n eine ganze Zahl von 1 bis 10 ist,

mit einem Epoxid A,

wobei das Epoxid A und das Amin in einem molaren Verhältnis von 10 bis 50 zu 1 eingesetzt werden, und

die Umsetzung so lange erfolgt, bis mindestens 90 Gew.-% des eingesetzten Epoxids A umgesetzt sind, so dass ein Zwischenprodukt erhalten wird,

b) Umsetzung des Zwischenprodukts mit einem Epoxid B, welches von Epoxid A verschieden ist,

wobei Epoxid B in einer Menge eingesetzt wird, die einem molaren Verhältnis des Epoxids zu dem Amin von 8 bis 40 zu 1 entspricht, und

die Umsetzung so lange erfolgt, bis mindestens 90 Gew.-% des eingesetzten Epoxids B umgesetzt sind, so dass das aminbasierte Polyol erhalten wird.

In einer zweiten Ausführungsform betrifft die Erfindung ein Verfahren nach Ausführungsform 1, dadurch gekennzeichnet, dass in dem Amin der allgemeinen Formel (I) $R^1$ jeweils der gleiche $C_1$ bis $C_3$ Alkylrest ist und n eine ganze Zahl von 2 bis 6 ist, wobei $R^1$ bevorzugt jeweils ein Methylrest ist.

In einer dritten Ausführungsform betrifft die Erfindung ein Verfahren nach einer der Ausführungsformen 1 oder 2, dadurch gekennzeichnet, dass das Amin der allgemeinen Formel (I) 3-Dimethylamino-l-propylamin ist.

In einer vierten Ausführungsform betrifft die Erfindung ein Verfahren nach einer der vorstehenden Ausführungsformen, dadurch gekennzeichnet, dass das Epoxid A Propylenoxid ist und/oder das Epoxid B Ethylenoxid ist.

In einer fünften Ausführungsform betrifft die Erfindung ein Verfahren nach einer der vorstehenden Ausführungsformen, dadurch gekennzeichnet, dass die Umsetzung in den Schritten a) und/oder b) in Anwesenheit eines Katalysators erfolgt und/oder in den Schritten a) und/oder b) und/oder nach Beendigung von Schritt b) ein Antioxidans eingesetzt wird.

In einer sechsten Ausführungsform betrifft die Erfindung ein Verfahren nach einer der vorstehenden Ausführungsformen, dadurch gekennzeichnet, dass die Umsetzung in Schritt a) so lange erfolgt, bis mindestens 95 Gew.-%, bevorzugt mindestens 98 Gew.-%, des eingesetzten Epoxids A umgesetzt sind und/oder die Umsetzung in Schritt b) so lange erfolgt bis mindestens 95 Gew.-%, bevorzugt mindestens 98 Gew.-%, des eingesetzten Epoxids B umgesetzt sind.

In einer siebten Ausführungsform betrifft die Erfindung ein aminbasiertes Polyol erhalten durch oder erhältlich durch ein Verfahren nach einer der Ausführungsformen 1 bis 6.

In einer achten Ausführungsform betrifft die Erfindung die Verwendung des aminbasierten Polyols nach Ausführungsform 7 als einbaubarer Katalysator bei der Herstellung von Polyurethan-Weichschaumstoff, insbesondere bei der Herstellung in einem Kaltschaumverfahren.

In einer neunten Ausführungsform betrifft die Erfindung die Verwendung nach Ausführungsform 8, dadurch gekennzeichnet, dass Möbelpolsterungen, Textileinlagen, Matratzen, Automobilsitze, Kopfstützen, Armlehnen, Schwämme, Dachhimmel, Türseitenverkleidungen, Sitzauflagen oder Bauelemente hergestellt werden.

In einer zehnten Ausführungsform betrifft die Erfindung einen Polyurethan-Weichschaumstoff erhalten durch oder erhältlich durch Umsetzung einer Zusammensetzung enthaltend oder bestehend aus

- einer Isocyanat-reaktiven Komponente A1 enthaltend oder bestehend aus Verbindungen mit gegenüber Isocyanten reaktionsfähigen Wasserstoffatomen und/oder einem gefüllten Polyol;

- einer weiteren Isocyanat-reaktiven Komponente A2, die von A1 verschieden ist;

- einer Komponente A3 enthaltend oder bestehend aus mindestens einem Treibmittel;

- optional einer Komponente A4 enthaltend oder bestehend aus Hilfs- und Zusatzstoffen; sowie

- einer Komponente B enthaltend oder bestehend aus mindestens einem aromatischen Polyisocyanat; bevorzugt Toluylendiisocyanat;

- einer Komponente C enthaltend oder bestehend aus einem aminbasierten Polyol erhalten oder erhältlich durch ein Verfahren gemäß den Ausführungsformen 1 bis 6, wobei die Umsetzung bei einem Isocyanat-Index von 70 bis 120 erfolgt.

In einer elften Ausführungsform betrifft die Erfindung einen Polyurethan-Weichschaumstoff nach Ausführungsform 10, dadurch gekennzeichnet, dass die Zusammensetzung enthält oder besteht aus

- von 65 bis 95 Gew.-Teilen der Komponente A1; wobei Komponente A1 bevorzugt 5 bis 60 Gew.-Teile, bezogen auf die Masse der Komponente A1 und A2, eines gefüllten Polyols enthält,

- von 0,1 bis 5 Gew.-Teilen der Komponente A2;

- von 1 bis 4,5 Gew.-Teilen der Komponente A3;

- optional von 0,1 bis 5 Gew.-Teilen der Komponente A4; sowie

- von 20 bis 70 Gew.-Teilen der Komponente B, wobei Komponente B insbesondere Toluylendiisocyanat enthält oder daraus besteht

- von 5 bis 35 Gew.-Teile der Komponente C wobei sich die Gewichtsteile der Komponenten A1 und C zu 100 addieren und die Angaben für die Gewichtsteile der Komponenten A2, A3, A4 und B auf die Summe der Komponenten A1 und C beziehen.

In einer zwölften Ausführungsform betrifft die Erfindung einen Polyurethan-Weichschaumstoff nach einer der Ausführungsformen 10 oder 11, dadurch gekennzeichnet, dass der Polyurethan-Weichschaum eine Emission von aliphatischen Aminen bei einer Messung nach VDA 278-Test von 2011, Aufheizung zur Ermittlung von VOC, von ≤ 10 mg/kg , bevorzugt ≤ 5 mg/kg, bevorzugter von ≤ 1 mg/kg, aufweist.

In einer dreizehnten Ausführungsform betrifft die Erfindung einen Polyurethan-Weichschaumstoff nach einer der Ausführungsformen 10 bis 12, dadurch gekennzeichnet, dass der Polyurethan-Weichschaumstoff einen Druckverformungsrest nach Feuchtwärme 50%/22h/70°C nach DIN EN ISO 1856-2008 von 5 bis 25 %, bevorzugt von 0 bis 10 % aufweist.

In einer vierzehnten Ausführungsform betrifft die Erfindung einen Polyurethan-Weichschaumstoff nach einer der Ausführungsformen 10 bis 13, dadurch gekennzeichnet, dass der Polyurethan-Weichschaumstoff ein Humid Aged Load Loss nach DIN EN ISO 3386-1 vom 10/2015 von -10 bis 20 % aufweist.

In einer fünfzehnten Ausführungsform betrifft die Erfindung einen Polyurethan-Weichschaumstoff nach einer der Ausführungsformen 10 bis 14, dadurch gekennzeichnet, dass der Polyurethan-Weichschaumstoff ein Humid Aged Compression set nach DIN EN 1856 von 2008 nach Dampfautoklavierung für 3h bei 105°C von 0 bis 40% aufweist.

**Beispiele**

Die vorliegende Erfindung wird anhand der nachfolgenden Beispiele weiter erläutert werden, ohne jedoch darauf beschränkt zu sein.

**Herstellung von amingestarteten Polyolen**

Zunächst wurden amingestartete Polyole hergestellt. Dabei wurden die folgenden Edukte eingesetzt

| Amin I | 3-Dimethylamino-1-propylamin |
|---|---|
| Amin II | auf Ethylendiamin gestarteter Polyether auf Propylenoxidbasis mit einer OH-Zahl von 470 mg KOH / g von der Covestro Deutschland AG kommerziell produziert. Der Gehalt an Ethylendiamin in diesem Polyether beträgt 12,59 Gew.-% und der Gehalt an Propylenoxid entsprechend 87,41 Gew.-%. |
| Amin III | N-Methyldiethanolamin |
| Propylenoxid Ethylenoxid IRGANOX® 1076 | Octadecyl-3-(3,5-di-tert-butyl-4-hydroxyphenyl)propionat |

<u>Amin I (3-Dimethylamino-1-propylamin) - gestartete Vorstufe:</u>

In einen 2 L Laborautoklaven wurden unter Stickstoffatmosphäre 583,6 g 3-Dimethylamino-1-propylamin gegeben. Sauerstoff wurde bei Raumtemperatur durch 4-maliges Beaufschlagen des Autoklaven mit Stickstoff bis zu einem Absolutdruck von 3 bar und anschließendes Ablassen des Überdrucks auf Normaldruck entfernt. Nach Schließen des Autoklaven wurde sein Inhalt sodann unter Rühren (800 U/min, Kreuzbalkenrührer) auf 105 °C erwärmt. Hierbei stellte sich ein Druck von 1,9 bar ein. Nach Erreichen der Reaktionstemperatur von 105 °C wurde mit der Dosierung von 663,6 g Propylenoxid in den Kopfraum des Autoklaven begonnen. Der während der Dosierzeit von 5 Stunden erreichte Maximaldruck betrug 4 bar. Nach Ende der Propylenoxiddosierung schloss sich eine Nachreaktionszeit von 3,0 Stunden Dauer an. Anschließend wurde das Produkt im Vakuum (34 mbar) über einen Zeitraum von 40 min. bei 105 °C ausgeheizt. Nach Abkühlen auf Raumtemperatur wurden 0,642 g IRGANOX® 1076 zugegeben. Die OH-Zahl betrug 482 mg KOH / g. Die Vorstufe enthält 53,21 Gew.-% an Oxypropyleneinheiten, bezogen auf die Gesamtmasse der Vorstufe.

**Herstellung der amingestarteten Polyole**

<u>Erfindungsgemäßes amingestartetes Polyol Nr. 1:</u>

In einen 10 L Laborautoklaven wurden unter Stickstoffatmosphäre 451,8 g der Amin I - gestarteten Vorstufe und 62,4 g einer 44,81 %igen wässrigen KOH-Lösung gegeben. Das erhaltene Gemisch wurde unter Rühren mit 200 U/min (Gitterrührer) auf 110 °C aufgeheizt und über einen Zeitraum von 3 Stunden bei dieser Temperatur und Rührerdrehzahl im Vakuum bei 90 mbar entwässert. Die Rührerdrehzahl wurde sodann auf 450 U/min erhöht und es wurden 5240,1 g Propylenoxid über einen Zeitraum von 4,67 Stunden in den Autoklaven dosiert. Nach Ende der Propylenoxiddosierung folgte eine Nachreaktionsphase von 4 Stunden Dauer. Danach wurden, ebenfalls bei 110 °C Reaktionstemperatur und 450 U/min 1310,3 g Ethylenoxid in den Reaktor über einen Zeitraum von 2,65 Stunden gegeben. Die anschließende Nachreaktion dauerte 2 Stunden. Der Reaktorinhalt wurde schließlich bei 110 °C im Vakuum (120 mbar) über einen Zeitraum von 1,3 Stunden ausgeheizt. Nach Abkühlen auf 80 °C wurden zunächst 700 ml destilliertes Wasser und danach 220,1 g einer 11,713 gew.-%igen wässrigen Schwefelsäurelösung zugegeben und für 0,5 Stunden gerührt. Schließlich erfolgte die Zugabe von 2,677 g IRGANOX® 1076 und es wurde nochmals 30 min. bei 80 °C verrührt.

Das so erhaltene Gemisch wurde unter Stickstoffbeschleierung in einen Glaskolben überführt und dort zunächst im Wasserstrahlvakuum bei 80 °C entwässert und schließlich noch 3 Stunden bei 110 °C unter einem Druck von 20 mbar (Membranpumpe) ausgeheizt. Das entstandene Salz wurde in einer beheizbaren Drucknutsche über ein Tiefenfilter (T 750) abfiltriert. Die OH-Zahl betrug 27,2 mg KOH/g.

Die Nachreaktion nach Beendigung der Dosierung eines Epoxidblocks wurde immer dann als beendet betrachtet, wenn die Druckabnahmerate im Reaktionsautoklaven den Wert von 20 mbar / h unterschritt.

<u>Referenzbeispiel amingestartetes Polyol Nr. 2:</u>

In einen 2 L Laborautoklaven wurden unter Stickstoffatmosphäre 96,2 g der Amin I - gestarteten Vorstufe und 13,5 g einer 44,89 %igen wässrigen KOH-Lösung gegeben. Das erhaltene Gemisch wurde unter Rühren mit 200 U/min (Kreuzbalkenrührer) auf 110 °C aufgeheizt und über einen Zeitraum von 3 h bei dieser Temperatur und Rührerdrehzahl im Vakuum bei 90 mbar entwässert. Die Rührerdrehzahl wurde sodann auf 800 U/min erhöht und es wurden 281 g Ethylenoxid über einen Zeitraum von 2,8 Stunden in den Autoklaven dosiert. Nach Ende der Ethylenoxiddosierung folgte eine Nachreaktionsphase von 1,8 Stunden Dauer. Danach wurden, nach Absenkung der Reaktionstemperatur auf 105 °C und ebenfalls bei einer Rührerdrehzahl von 800 U/min, 1123,4 g Propylenoxid in den Reaktor über einen Zeitraum von 6,9 Stunden gegeben. Die anschließende Nachreaktion dauerte 5 Stunden. Der Reaktorinhalt wurde schließlich bei 105 °C im Vakuum (80 mbar) über einen Zeitraum von 1 Stunde ausgeheizt. Nach Abkühlen auf 80 °C wurden zunächst 150 ml destilliertes Wasser und danach 46,588 g einer 12,25 gew.-%igen wässrigen Schwefelsäurelösung zugegeben und für 0,5 Stunden gerührt. Schließlich erfolgte die Zugabe von 0,626 g IRGANOX® 1076 und es wurde nochmals 30 min. bei 80 °C verrührt.

Das so erhaltene Gemisch wurde unter Stickstoffbeschleierung in einen Glaskolben überführt und dort zunächst im Wasserstrahlvakuum bei 80 °C entwässert und schließlich noch 3 h bei 110 °C unter einem Druck von 20 mbar ausgeheizt. Das entstandene Salz wurde in einer beheizbaren Drucknutsche über ein Tiefenfilter (T 750) abfiltriert. Die OH-Zahl betrug 37,4 mg KOH/g.

<u>Referenzbeispiel amingestartetes Polyol Nr. 3:</u>

In einen 2 L Laborautoklaven wurden unter Stickstoffatmosphäre 94,4 g der Amin I - gestarteten Vorstufe und 13,82 g einer 45,30 %igen wässrigen KOH-Lösung gegeben. Das erhaltene Gemisch wurde unter Rühren mit 200 U/min (Kreuzbalkenrührer) auf 110 °C aufgeheizt und über einen Zeitraum von 3 h bei dieser Temperatur und Rührerdrehzahl im Vakuum bei 90 mbar entwässert. Die Rührerdrehzahl wurde sodann auf 800 U/min erhöht, die Reaktortemperatur wurde auf 105 °C gesenkt und es wurden 1245,2 g Propylenoxid über einen Zeitraum von 6,7 Stunden in den Autoklaven dosiert. Nach Ende der Propylenoxiddosierung folgte eine Nachreaktionsphase von 6 Stunden Dauer. Danach wurden, nach Erhöhung der Reaktionstemperatur auf 110 °C und ebenfalls bei einer Rührerdrehzahl von 800 U/min, 140,4 g Ethylenoxid in den Reaktor über einen Zeitraum von 1,5 Stunden gegeben. Die anschließende Nachreaktion dauerte 1 Stunde. Der Reaktorinhalt wurde schließlich bei 110 °C im Vakuum (80 mbar) über einen Zeitraum von 0,5 Stunden ausgeheizt. Nach Abkühlen auf 80 °C wurden zunächst 150 ml destilliertes Wasser und danach 47,02 g einer 12,25 gew.-%igen wässrigen Schwefelsäurelösung zugegeben und für 0,5 Stunden gerührt. Schließlich erfolgte die Zugabe von 0,616 g IRGANOX® 1076 und es wurde nochmals 30 min. bei 80 °C verrührt.

Das so erhaltene Gemisch wurde unter Stickstoffbeschleierung in einen Glaskolben überführt und dort zunächst im Wasserstrahlvakuum bei 80 °C entwässert und schließlich noch 3 h bei 110 °C unter einem Druck von 20 mbar ausgeheizt. Das entstandene Salz wurde in einer beheizbaren Drucknutsche über ein Tiefenfilter (T 750) abfiltriert. Die OH-Zahl betrug 40,4 mg KOH/g.

Referenzbeispiel amingestartetes Polyol Nr. 4:

In einen 2 L Laborautoklaven wurden unter Stickstoffatmosphäre 121,1 g von Amin II (ethylendiamingestarteter Polyether mit der OHZ 470 mg KOH/g) und 14,57 g einer 44,89 %igen wässrigen KOH-Lösung gegeben. Das erhaltene Gemisch wurde unter Rühren mit 200 U/min (Kreuzbalkenrührer) auf 110 °C aufgeheizt und über einen Zeitraum von 3,2 Stunden bei dieser Temperatur und Rührerdrehzahl im Vakuum bei 80 mbar entwässert. Die Rührerdrehzahl wurde sodann auf 800 U/min erhöht und es wurden 1211,6 g Propylenoxid über einen Zeitraum von 5,8 Stunden in den Autoklaven dosiert. Nach Ende der Propylenoxiddosierung folgte eine Nachreaktionsphase von 6 Stunden Dauer. Danach wurden, ebenfalls bei einer Rührerdrehzahl von 800 U/min, 302,9 g Ethylenoxid in den Reaktor über einen Zeitraum von 1,5 Stunden gegeben. Die anschließende Nachreaktion dauerte 1 Stunde. Der Reaktorinhalt wurde schließlich bei 110 °C im Vakuum (80 mbar) über einen Zeitraum von 0,9 Stunden ausgeheizt. Nach Abkühlen auf 80 °C wurden zunächst 150 ml destilliertes Wasser und danach 48,62 g einer 12,25 gew.-%igen wässrigen Schwefelsäurelösung zugegeben und für 0,5 Stunden gerührt. Schließlich erfolgte die Zugabe von 0,616 g IRGANOX® 1076 und es wurde nochmals 30 min. bei 80 °C verrührt.

Das so erhaltene Gemisch wurde unter Stickstoffbeschleierung in einen Glaskolben überführt und dort zunächst im Wasserstrahlvakuum bei 80 °C entwässert und schließlich noch 3 h bei 110 °C unter einem Druck von 20 mbar ausgeheizt. Das entstandene Salz wurde in einer beheizbaren Drucknutsche über ein Tiefenfilter (T 750) abfiltriert. Die OH-Zahl betrug 32,1 mg KOH/g.

Referenzbeispiel amingestartetes Polyol Nr. 5:

In einen 2 L Laborautoklaven wurden unter Stickstoffatmosphäre 49,5 g Amin III und 13,44 g einer 44,89 %igen wässrigen KOH-Lösung gegeben. Das erhaltene Gemisch wurde unter Rühren mit 200 U/min (Kreuzbalkenrührer) auf 110 °C aufgeheizt und über einen Zeitraum von 3 Stunden bei dieser Temperatur und Rührerdrehzahl im Vakuum bei 70 mbar entwässert. Die Rührerdrehzahl wurde sodann auf 800 U/min erhöht und es wurden 1169,9 g Propylenoxid über einen Zeitraum von 5,5 Stunden in den Autoklaven dosiert. Nach Ende der Propylenoxiddosierung folgte eine Nachreaktionsphase von 7 Stunden Dauer. Danach wurden, ebenfalls bei einer Rührerdrehzahl von 800 U/min, 280,9 g Ethylenoxid in den Reaktor über einen Zeitraum von 1,6 Stunden gegeben. Die anschließende Nachreaktion dauerte 1,3 Stunden. Der Reaktorinhalt wurde schließlich bei 110 °C im Vakuum (80 mbar) über einen Zeitraum von 0,5 Stunden ausgeheizt. Nach Abkühlen auf 80 °C wurden zunächst 150 ml destilliertes Wasser und danach 48,70 g einer 12,25 gew.-%igen wässrigen Schwefelsäurelösung zugegeben und für 0,5 Stunden gerührt. Schließlich erfolgte die Zugabe von 0,779 g IRGANOX® 1076 und es wurde nochmals 30 min. bei 80 °C verrührt.

Das so erhaltene Gemisch wurde unter Stickstoffbeschleierung in einen Glaskolben überführt und dort zunächst im Wasserstrahlvakuum bei 80 °C entwässert und schließlich noch 3 h bei 110 °C unter einem Druck von 20 mbar ausgeheizt. Das entstandene Salz wurde in einer beheizbaren Drucknutsche über ein Tiefenfilter (T 750) abfiltriert. Die OH-Zahl betrug 33,7 mg KOH/g.

Erfindungsgemäßes amingestartetes Polyol Nr. 6:

In einen 2 L Laborautoklaven wurden unter Stickstoffatmosphäre 98,5 g der Amin I - gestarteten Vorstufe und 13,377 g einer 44,81 %igen wässrigen KOH-Lösung gegeben. Das erhaltene Gemisch wurde unter Rühren mit 200 U/min (Kreuzbalkenrührer) auf 110 °C aufgeheizt und über einen Zeitraum von 3 Stunden bei dieser Temperatur und Rührerdrehzahl im Vakuum bei 90 mbar entwässert. Die Rührerdrehzahl wurde sodann auf 800 U/min erhöht und es wurden 838,5 g Propylenoxid über einen Zeitraum von 4,25 Stunden in den Autoklaven dosiert. Nach Ende der Propylenoxiddosierung folgte eine Nachreaktionsphase von 8 Stunden Dauer. Danach wurden, ebenfalls bei 110 °C Reaktionstemperatur und 4800 U/min 558,9 g Ethylenoxid in den Reaktor über einen Zeitraum von 3,68 Stunden gegeben. Die anschließende Nachreaktion dauerte 1 Stunde. Der Reaktorinhalt wurde schließlich bei 110 °C im Vakuum (70 mbar) über einen Zeitraum von 1,5 Stunden ausgeheizt. Nach Abkühlen auf 80 °C wurden zunächst 150 ml destilliertes Wasser und danach 48,223 g einer 11,53 gew.-%igen wässrigen Schwefelsäurelösung zugegeben und für 0,5 Stunden gerührt. Schließlich erfolgte die Zugabe von 0,615 g IRGANOX® 1076 und es wurde nochmals 30 min. bei 80 °C verrührt.

Das so erhaltene Gemisch wurde unter Stickstoffbeschleierung in einen Glaskolben überführt und dort zunächst im Wasserstrahlvakuum bei 80 °C entwässert und schließlich noch 3 Stunden bei 110 °C unter einem Druck von 20 mbar (Membranpumpe) ausgeheizt. Das entstandene Salz wurde in einer beheizbaren Drucknutsche über ein Tiefenfilter (T 750) abfiltriert. Die OH-Zahl betrug 28,3 mg KOH/g.

Die Eigenschaften der jeweiligen aminbasierten Polyole sind in Tabelle 1 zusammengefasst:

**Tabelle 1:** Zusammensetzung und Eigenschaften der aminbasierten Polyole

| aminbasiertes Polyol Nr. | Erfindungsgemäß | Referenz | | | | Erfindungsgemäß |
|---|---|---|---|---|---|---|
| | 1 | 2 | 3 | 4 | 5 | 6 |
| OH-Zahl [mgKOH/g] | 27,2 | 37,4 | 40,4 | 32,1 | 33,7 | 28,3 |
| Molares Verhältnis von Propylenoxid zu Amin | 45,6 : 1 | 46,0 : 1 | 51,9 : 1 | 89,3 : 1 | 30,5 : 1 | 33,8 : 1 |
| Molares Verhältnis von Ethylenoxid zu Amin | 14,4 : 1 | 14,5 : 1 | 7.4 : 1 | 27,1 : 1 | 9,7 : 1 | 26,8 : 1 |
| Endblock im Wesentlichen auf Ethylenoxid zurückzuführen | ja | nein | ja | ja | ja | ja |
| Wassergehalt [ppm] | 1100 | 1300 | 800 | 700 | 1500 | 600 |
| Viskosität bei 25 °C [mPas] | 444 | 253 | 372 | 755 | 677 | n. d. |

Die aminbasierten Polyole 1, 2, 3, 5 und 6 hatten eine auf Basis der Verhältnisse der Einsatzstoffe berechnete OH-Zahl von 33 mg KOH/g. Das aminbasierte Polyol 4 hatte eine auf Basis der Verhältnisse der Einsatzstoffe berechnete OH-Zahl von 35 mg KOH/g.

Die in Tabelle 1 angegebenen (gemessenen) OH-Zahlen wurden nach ASTM D 4274-05 bestimmt. Die gemessenen OH-Zahlen bieten jedoch nur eine Orientierung darüber, wie viele Hydroxygruppen in den aminbasierten Polyolen enthalten sind, da das Messergebnis durch die Amingruppe des aminbasierten Polyols verfälscht werden kann.

Die gewichtsprozentualen Anteile an Ethylenoxid und Propylenoxid, jeweils bezogen auf die Gesamtmasse der dosierten Epoxide, in den Polyetherketten der synthetisierten aminbasierten Polyole sind in Tabelle 2 zusammengefasst:

**Tabelle 2:** Gewichtsprozentuale Anteile an Ethylenoxid und Propylenoxid

| | amingestartetes Polyol Nr. | Gew.-%, der jeweiligen Epoxide in den Polyetherketten, jeweils bezogen auf Masse der dosierten Epoxide |
|---|---|---|
| Erfindungsgemäß | 1 | Amin I - PO [80,7] - EO [19,3] |
| Referenz | 2 | Amin I - PO [3,5] - EO [19,3] -PO [77,2] |
| Referenz | 3 | Amin I - PO [90,2] - EO [9,8] |
| Referenz | 4 | Amin II - PO [81,3] - EO [18,7] |
| Referenz | 5 | Amin III - PO [80,6] - EO [19,4] |
| Erfindungsgemäß | 6 | Amin I - PO [60] - EO [40] |
| PO = Propylenoxid; EO = Ethylenoxid | | |

**Herstellung von MDI-basiertem Polyurethan-Weichschaum**

Es wurden Polyurethan-Weichschäume mit den folgenden Komponenten hergestellt. Die Zusammensetzung der Polyurethan-Weichschäume ergibt sich aus Tabelle 3.

| | |
|---|---|
| Polyetherpolyol | Arcol® Polyol 1374; Reaktives Polyethertriol; OH-Zahl 27 mg KOH/g |
| Aminbasierte Polyole 1-6 | wie oben beschrieben |
| Zusatzstoff 1 | Tegostab B 8715LF2 (OH-Zahl 82 mg KOH/g) |
| Niax Catalyst A-400 | nicht-einbaubarer Katalysator enthaltend Bis(2-dimethylaminoethyl)ether; Produkt der Firma Momentive |
| DABCO 33-LV | 1,4-Diazabicyclo[2.2.2]octan (33%) in Dipropylenglykol; Produkt der Firma Evonik |
| Zellöffner | Desmophen 41WB01; Reaktiver Polyether, ein Triol mit hohem Anteil an Oxyethyleneinheiten; Handelsprodukt der Firma Covestro; OH-Zahl 37 mg KOH/g |
| Isocyanat | Mischung aus Diphenylmethan-4,4'-diisocyanat mit Isomeren und Homologen mit höherer Funktionalität (MDI), NCO-Gehalt 32,57 % (Desmodur VP.PU PU 3230; Produkt der Firma Covestro) |

In für die Herstellung von Polyurethan-Weichformschaumstoffen im Kaltschaumschaumverfahren üblicher Verarbeitungsweise nach dem Einstufenverfahren werden die in den Beispielen der in der nachfolgenden Tabelle 3 aufgeführten Komponenten miteinander zu einem Reaktionsgemisch vermengt. Das Reaktionsgemisch wird in eine auf 60 °C geheizte und vorher mit einem Trennmittel (PURA E1429H NV (Chem-Trend)) bestrichene Metallform eingebracht. Die Einsatzmenge wird entsprechend der angestrebten Rohdichte und dem Formenvolumen gewählt. Es wurde mit einer Form mit einem Volumen von 9,7 dm$^3$ gearbeitet. Die Formteile wurden nach 4 Minuten entformt und aufgedrückt. Die Formteile wurden nach 4 Stunden in Aluminium-Verbundfolie versiegelt. Bei der Berechnung des in Tabelle 3 angegebenen Index wurde für die aminbasierten Polyole jeweils die nach ASTM D 4274-05 experimentell ermittelte OH-Zahl verwendet.

Tabelle 3: Zusammensetzung und Eigenschaften von **MDI**-basierten Polyurethan-Weichschäumen

| HR Schaum [Gew.- Teile] | Erfind -ungsgemäß | Referenz | | | | Erfindungsgemäß | Referenz |
|---|---|---|---|---|---|---|---|
| | 1 | 2 | 3 | 4 | 5 | 6 | 6A |
| Pol yetherpol yol | 68,00 | 68,00 | 68,00 | 68,00 | 68,00 | 68,00 | 98,00 |
| aminbasiertes Polyol 1 | 30,00 | - | - | - | - | - | - |
| aminbasiertes Polyol 2 | - | 30,00 | - | - | - | - | - |
| aminbasiertes Polyol 3 | - | - | 30,00 | - | - | - | - |
| aminbasiertes Polyol 4 | - | - | - | 30,00 | - | - | - |
| aminbasiertes Polyol 5 | - | - | - | - | 30,00 | - | - |
| aminbasiertes Polyol 6 | - | - | - | - | - | 30,00 | - |
| Wasser | 3,47 | 3,46 | 3,50 | 3,50 | 3,46 | 3,47 | 3,44 |
| Zusatzstoff I | 1 | 1 | 1 | 1 | 1 | 1,0 | 1,00 |
| Zellöffner | 2,00 | 2,00 | 2,00 | 2,00 | 2,00 | 2,0 | 2,00 |
| Niax A-400 | - | - | - | - | - | - | 0,20 |
| Dabco 33-LV | - | - | - | - | - | - | 0,30 |
| MDI | 60,50 | 61,68 | 61,68 | 61,68 | 61,42 | 56,17 | 56,93 |
| Index | 100 | 100 | 100 | 100 | 100 | 100 | 100 |
| Kerndichte [kg/m$^3$] | 55,7 | 57,2 | 55,6 | - | - | 54,9 | 55,1 |
| Stauchhärte CLD 4/40 [kPa] | 11,09 | 9,43 | 10,2 | - | - | 11,42 | 10,93 |
| Zugfestigkeit [kPa] | 188 | 168 | 187 | - | - | 163 | 185 |
| Bruchdehnung [%] | 130 | 128 | 132 | - | - | 99 | 130 |
| Emissionswerte Summe aliphatische Amine bei VOC-Messung nach VDA 278 [mg/kg] | 0 | 0 | 0 | - | - | 0 | 128 |
| Druckverformungsrest nach Feuchtwärme CS 50%/22h/70°C [%] | 8,1 | 28 | 9,1 | - | - | 9,5 | 5,1 |
| Druckverformungsrest nach Feuchtwärme CS 75%/22h/70°C [%] | 54,1 | 71,2 | 23,2 | - | - | 17 | 7,4 |
| Druckverformungsrest nach Feuchtwärme CS 70%/22h/40°C /95% Feuchtigkeit [%] | 22 | 25,1 | 20,4 | - | - | 20,4 | 15,0 |

14

(fortgesetzt)

| HR Schaum [Gew.- Teile] | Erfind -ungsgemäß | Referenz | | | | Erfindungsgemäß | Referenz |
|---|---|---|---|---|---|---|---|
| | 1 | 2 | 3 | 4 | 5 | 6 | 6A |
| Humid aged load loss (CLD 4/40 [kPa]-Stauchhärte nach autoklavieren CLD 4/40 [kPa]) / Stauchhärte CLD 4/40 [kPa]) HALL [%] | 19,75 | 20,25 | 19,22 | - | - | 17,16 | 11,16 |
| Druckverformungsrest nach Feuchtwärme HACS [%] | 38,4 | 66,1 | 35,1 | - | - | 37,3 | 17,2 |
| Bemerkung | - | - | - | Kollaps | Kollaps | - | - |

Bestimmung der Kerndichte nach DIN EN ISO 845 vom 10/2015 im Bereich von 25 bis 90 kg/m$^3$ Bestimmung der Stauchhärte nach DIN EN ISO 3386-1 vom 10/2015 im Bereich von 2 bis 12 kPa, Bestimmung der Zugfestigkeit nach DIN EN ISO 1798 vom 04/2008 im Bereich von 100 bis 250 kPa Bestimmung der Bruchdehnung nach DIN EN ISO 1798 vom 04/2008 im Bereich von 100 bis 250 % Bestimmung des Druckverformungsrestes nach Feuchtwärme CS 50 % nach DIN EN 1856 von 2008 Bestimmung des Druckverformungsrestes nach Feuchtwärme CS 70 % nach DIN EN 1856 von 2008 Bestimmung des Druckverformungsrestes nach Feuchtwärme CS 75 % nach DIN EN 1856 von 2008 Bestimmung des Humid Aged Load Loss (HALL) nach DIN EN ISO 3386-1 vom 10/2015 Bestimmung des Druckverformungsrestes nach Feuchtwärme ,HACS 50 %, im Dampfautoklav für 3h bei 105°C nach DIN EN 1856 von 2008

Der VDA 278-Test (Verband der Automobilindustrie; Stand 2011) ist ein Thermodesorptionsverfahren zur Ermittlung von organischen Emissionen von nichtmetallischen Werkstoffen bei erhöhten Temperaturen. Dabei werden die Proben aufgeheizt und die emittierten Substanzen mit einem Inertgasstrom in einer Kühlfalle kryofokusiert und danach analysiert. Um den Anteil an leichtflüchtigen organischen Substanzen (VOC) zu ermitteln, wird die Probe auf 90 °C aufgeheizt. Bei der Ermittlung der VOC werden auch leichtflüchtige Amine detektiert. Die Nachweisgrenze für VOC liegt beim VDA 278-Test bei 1 mg/kg.

Die experimentellen Daten illustrieren eindrücklich die Vorteile der erfindungsgemäßen amingestarteten Polyole bei der Herstellung von MDI-basiertem Polyurethan-Weichschaum im Hinblick auf Emissionen von leichtflüchtigen organischen Stoffen (VOC/FOG) aus Polyurethan-Schaum. In Referenzbeispiel 6A wurden nicht-einbaubare Katalysatoren bei der Synthese des Polyurethan-Schaums verwendet und dieser Schaum emittierte 128 mg/kg an leichtflüchtigen Bestandteilen. Im Gegensatz dazu lagen die Emissionen aus den Polyurethan-Schäumen mit den erfindungsgemäßen, einbaubaren Polyol der erfindungsgemäßen Beispiele 1 und 6 unterhalb der Bestimmungsgrenze von 1 mg/kg.

Darüber hinaus zeigen die experimentellen Daten, dass die erfindungsgemäßen Polyole die mechanischen Eigenschaften der erhaltenen Polyurethan-Weichschäume nicht negativ beeinflussen. Die erfindungsgemäßen Polyurethan-Weichschäume der Beispiele 1 und 6 weisen vergleichbare Werte für die Kerndichte, die Stauchhärte, die Zugfestigkeit und die Bruchdehnung auf, wie der Polyurethan-Schaum aus Referenzbeispiel 6A, hergestellt mit herkömmlichen, nicht-einbaubaren Katalysatoren. Die den erfindungsgemäßen Polyurethan-Weichschäumen der Beispiele 1 und 6 wiesen zudem gute Wärmefeuchtalterungseigenschaften auf. Beim HALL-Test wiesen die erfindungsgemäßen Polyurethan-Schäume Werte von unter 20% auf und beim HACS-Test Test von unter 40% auf.

Des Weiteren zeigen die Referenzbeispiele 4 und 5, dass nicht jedes Amin für die Synthese eines einbaubaren Polyols geeignet ist. Die Zusammensetzungen, welche diese nicht erfindungsgemäße Polyole enthielten, kollabierten bei der Synthese, so dass kein Polyurethan-Schaum erhalten werden konnte.

**Bestimmung der katalytischen Eigenschaften der amingestarteten Polyole bei der Herstellung von MDI-basiertem Polyurethan-Weichschaum**

Die katalytische Aktivität der amingestarteten, einbaubaren Polyole wurde durch eine Steigprofilmessung ermittelt. Dazu wurden die in Tabelle 4 aufgeführten Komponenten gemischt und in einem geeigneten Gefäß das Expansionsverhalten der Schaumprobe direkt nach dem Einfüllen in die Schäumform gemessen. Dabei wird die Höhe des aufsteigenden Schaums in Abhängigkeit von der Zeit gemessen. Die Probe sollte ein zügiges Ansteigen zeigen und die Höhe des Schaums danach auf einem möglichst hohen Wert verbleiben, da ansonsten die Schaumprobe schrumpft.

**Tabelle 4:** Zusammensetzung der **MDI**-basierten Polyurethan-Weichschäume für die Bestimmung der katalytischen Eigenschaften der amingestarteten Polyole

| HR Schaum [Gew Teile] | Erfindungsgemäß | Referenz | | | |
|---|---|---|---|---|---|
| | 7 | 8 | 9 | 10 | 11 |
| Polyetherpol yol | 68,00 | 68,00 | 68,00 | 68,00 | 68,00 |
| aminbasiertes Polyol 1 | 30,00 | - | - | - | - |
| aminbasiertes Polyol 2 | - | 30,00 | - | - | - |
| aminbasiertes Polyol 3 | - | - | 30,00 | - | - |
| aminbasiertes Polyol 4 | - | - | - | 30,00 | - |

(fortgesetzt)

| HR Schaum [Gew Teile] | Erfindungsgemäß | Referenz | | | |
|---|---|---|---|---|---|
| | 7 | 8 | 9 | 10 | 11 |
| aminbasiertes Polyol 5 | - | - | - | - | 30,00 |
| Wasser | 3,47 | 3,46 | 3,50 | 3,50 | 3,45 |
| Vernetzer | 1,20 | 1,20 | 1,20 | 1,20 | 1,20 |
| Zusatzstoff I | 1,00 | 1,00 | 1,00 | 1,00 | 1,00 |
| MDI | 60,50 | 61,68 | 61,68 | 61,68 | 61,42 |
| Index | 100 | 100 | 100 | 100 | 100 |

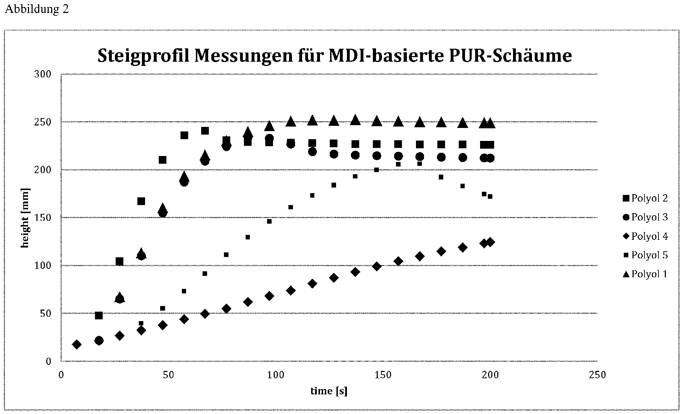

Die Ergebnisse der Messungen sind in Abbildung 2 dargestellt.

Die experimentellen Daten zeigen, dass das erfindungsgemäße amingestartete Polyol 1 eine vorteilhafte katalytische Wirkung bei der Herstellung von MDI-basierten Polyurethan-Weichschaumstoffen hat. Der MDI-basierte Polyurethan-Weichschaum 7, der mit den erfindungsgemäßen amingestarteten Polyole 1 hergestellt wurde, erreichte Schaumhöhen von mehr als 200 mm innerhalb eines kurzen Zeitraums. Von den MDI-basierten Polyurethan-Weichschaumstoffen schäumte Schaum 7 mit dem erfindungsgemäßen amingestarteten Polyol 1 innerhalb von ca. 100 s auf die insgesamt höchste maximale Schaumhöhe von 250 mm.

Im Vergleich zu den erfindungsgemäßen amingestarteten Polyolen konnten mit den nicht erfindungsgemäßen Polyolen der Referenzbeispiele 10 und 11 keine MDI-basierten Polyurethan-Weichschäume erhalten werden. Im Referenzbeispiel 10 erreichte die Zusammensetzung zur Herstellung eines Polyurethan-Weichschaums nur eine maximale Höhe von ca. 125 mm und in Referenzbeispiel 11 kollabierte die Zusammensetzung nach Erreichen der maximalen Schaumhöhe.

**Herstellung von TDI-basiertem Polyurethan-Weichschaum**

Es wurden Polyurethan-Weichschäume mit den folgenden Komponenten hergestellt. Die Zusammensetzung der Polyurethan-Weichschäume ergibt sich aus Tabelle 5.

| | |
|---|---|
| Polyetherpolyol | Polyetherpolyol mit einer OH-Zahl von 31,5 mg KOH/g, hergestellt in Gegenwart von KOH als Katalysator durch Addition von Propylenoxid und Ethylenoxid im Verhältnis 82,5 zu 17,5 unter Verwendung von Glycerin und Sorbitol im Verhältnis 70,8 zu 29,2 als Starter mit 85 mol% primären OH-Gruppen |
| SAN-modifiziertes Polyol | Hyperlite 1650; Reaktives Polyol, modifiziert mit Styrol-Acrylnitril (SAN) mit einem Feststoffgehalt von ca. 43 Gew-%; OH-Zahl 20,2 mg KOH/g; Produkt der Covestro Deutschland AG |
| amingest. Polyole 1-5 | wie oben beschrieben |
| Zusatzstoff II | Tegostab B 8736LF2, silikonbasiertes Benetzungsmittel für die Schäumform (OH-Zahl 72 mg KOH/g), Produkt der Firma Evonik |
| Zusatzstoff III | Tegostab B 8734LF2 (OH-Zahl 83 mg KOH/g), Produkt der Firma Evonik |
| Vernetzer | Diethanolamin, OH-Zahl 1609 mg KOH/g |
| Katalysator | nicht einbaubarer Katalysator (Niax Catalyst A-400) enthaltend Bis(2-dimethylaminoethyl)ether; Produkt der Firma Momentive |
| DABCO 33-LV | 1,4-Diazabicyclo[2.2.2]octan (33%) in Dipropylenglykol; Produkt der Firma Evonik |
| Isocyanat | Toluylendiisocyanat (TDI) NCO-Gehalt 48,3% |

Die TDI-basierten Polyurethan-Weichschäume wurden nach dem oben beschriebenen Verfahren für MDI-basierte Polyurethan-Weichschäume hergestellt, wobei die Formteile nach 5 Minuten entformt wurden. Bei der Berechnung des in Tabelle 5 angegebenen Index wurde für die aminbasierten Polyole jeweils die nach ASTM D 4274-05 experimentell ermittelte OH-Zahl verwendet.

**Tabelle 5:** Zusammensetzung und Eigenschaften von **TDI**-basierten Polyurethan-Weichschäumen

| | Erfindung sgemäß | Referenz | | | | |
|---|---|---|---|---|---|---|
| **HR Schaum** [Gew.Teile] | **12** | **13** | **14** | **15** | **16** | **17** |
| Pol yetherpol yol | 45,00 | 45,00 | 45,00 | 45,00 | 45,00 | 75,00 |
| SAN-modifiziertes Polyol | 25,00 | 25,00 | 25,00 | 25,00 | 25,00 | 25,00 |
| aminbasiertes Polyol 1 | 30,00 | - | - | - | - | - |
| aminbasiertes Polyol 2 | - | 30,00 | - | - | - | - |
| aminbasiertes Polyol 3 | - | - | 30,00 | - | - | - |
| aminbasiertes Polyol 4 | - | - | - | 30,00 | - | - |
| aminbasiertes Polyol 5 | - | - | - | - | 30,00 | - |
| Wasser | 2,77 | 2,76 | 2,80 | 2,80 | 2,75 | 2,72 |
| Vernetzer | 0,800 | 0,800 | 0,800 | 0,800 | 0,800 | 0,80 |
| Katalysator | | | | | | 0,25 |
| Dabco 33-LV | | | | | | 0,40 |
| Zusatzstoff III | 0,60 | 0,60 | 0,60 | 0,60 | 0,60 | 0,60 |
| Isocyanat TDI | 34,67 | 35,11 | 35,63 | 35,63 | 35,32 | 35,58 |
| Index | 105 | 105 | 105 | 105 | 105 | 105 |
| Kerndichte [kg/m$^3$] | 50,1 | 48,7 | 48,2 | | | 47,3 |
| Stauchhärte CLD 4/40 [kPa] | 5,96 | 3,81 | 4,49 | | | 5,82 |
| Zugfestigkeit [kPa] | 140 | 108 | 120 | | | 150 |
| Bruchdehnung [%] | 122 | 118 | 108 | | | 110 |
| Reißfestigkeit [N/mm] | 0,418 | 0,228 | 0,266 | | | 0,295 |
| Emissionswerte Summe aliphatische Amine mit bei VOC-Messung nach VDA 278 [mg/kg] | 0 | 0 | 0 | | | 288 |
| Stauchhärte nach autoklavieren CLD 4/40 [kPa] | 5,13 | 3,56 | 4,65 | | | 5,24 |
| Druckverformungsrest nach Feuchtwärme CS 50%/22h/70°C [%] | 5,7 | 33,3 | 8,8 | | | 3,8 |
| Druckverformungsrest nach Feuchtwärme CS 75%/22h/70°C [%] | 7,5 | 72,1 | 65,1 | | | 6,2 |
| Druckverformungsrest nach Feuchtwärme CS 70%/22h/40°C /95% Feuchtigkeit [%] | 22,9 | 93,5 | 33,3 | | | 21,5 |
| Humid aged load loss (CLD 4/40 [kPa]-Stauchhärte nach autoklavieren CLD 4/40 [kPa]) / Stauchhärte CLD 4/40 [kPa]) HALL [%] | 13.93 | 6,56 | -3,56 | | | 9,97 |
| Druckverformungsrest nach Feuchtwärme HACS [%] | 14,5 | 73,9 | 30,3 | | | 14,8 |
| Bemerkung | | | | Kollaps | Kollaps | |

Die Prüfwerte wurden nach den gleichen DIN-Normen und Verfahren ermittelt wie bei den MDI-basierten Polyurethan-Schäumen.

Die experimentellen Daten zeigen, dass die erfindungsgemäßen amingestarteten Polyole auch bei der Herstellung von TDI-basiertem Polyurethan-Weichschaum im Hinblick auf Emissionen von leichtflüchtigen organischen Stoffen (VOC/FOG) aus Polyurethan-Schaum den herkömmlichen Katalysatoren überlegen sind. Der Schaum aus Referenzbeispiel 17, hergestellt auf Basis nicht-einbaubarer Katalysatoren, emittierte 288 mg/kg an leichtflüchtigen Bestandteilen. Im Gegensatz dazu lagen die Emissionen aus den Polyurethan-Schäumen mit den erfindungsgemäßen, einbaubaren Polyolen auch hier unterhalb der Bestimmungsgrenze von 1 mg/kg.

Darüber hinaus zeigen die experimentellen Daten, dass das erfindungsgemäße Polyol die mechanischen Eigenschaften der erhaltenen Polyurethan-Weichschäume nicht negativ beeinflusst. Auch die Werte der Wärmefeuchtalterung des Polyurethan-Weichschaums aus dem erfindungsgemäßen Beispiel 12 waren innerhalb der gewünschten Bereiche, insbesondere beim HALL-Test von -10% bis 20% und beim HACS-Test Test von 0 bis 40%.

Wie schon bei den TDI-basierten Polyurethan-Schäumen zeigen die Referenzbeispiele 15 und 16, dass nicht jedes Amin für die Synthese eines einbaubaren Polyols geeignet ist, weil die Zusammensetzungen mit diesen Polyolen beim Aufschäumen kollabierten und kein Polyurethan-Schaum erhalten wurde.

**Bestimmung der katalytischen Eigenschaften der aminbasierten Polyole bei der Herstellung von TDI-basierten Polyurethan-Weichschaum**

Die katalytische Aktivität wurde nach dem oben bei den MDI-basierten Polyurethan-Weichschäumen beschriebenen Verfahren bestimmt.

**Tabelle 6:** Zusammensetzung der Polyurethan-Weichschäume für die Bestimmung der katalytischen Eigenschaften der aminbasierten Polyole

| | Erfindung sgemäß | Referenz | | | |
|---|---|---|---|---|---|
| **HR Schaum** [Gew.-Teile?] | **18** | **19** | **20** | **21** | **22** |
| Polyetherpol yol | 30,00 | 30,00 | 30,00 | 30,00 | 30,00 |
| SAN-modifiziertes Polyol | 40,00 | 40,00 | 40,00 | 40,00 | 40,00 |
| aminbasiertes Polyol 1 | 30,00 | - | - | - | - |
| aminbasiertes Polyol 2 | - | 30,00 | - | - | - |
| aminbasiertes Polyol 3 | - | - | 30,00 | - | - |
| aminbasiertes Polyol 4 | - | - | - | 30,00 | - |
| aminbasiertes Polyol 5 | - | - | - | - | 30,00 |
| Wasser | 3,466 | 3,460 | 3,499 | 3,499 | 3,454 |
| Vernetzer | 0,800 | 0,800 | 0,800 | 0,800 | 0,800 |
| Zusatzstoff II | 0,60 | 0,60 | 0,60 | 0,60 | 0,60 |
| Isocyanat TDI | 39,50 | 40,29 | 40,42 | 40,42 | 40,12 |
| Index | 100 | 100 | 100 | 100 | 100 |

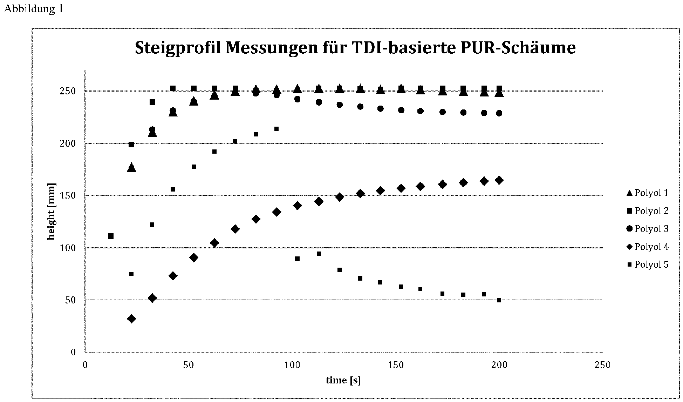

Die Ergebnisse der Messung sind in Abbildung 1 dargestellt.

Die vorteilhafte katalytische Wirkung des erfindungsgemäßen amingestarteten Polyols 1 war bei der Herstellung TDI-basierter Polyurethan-Weichschaumstoffe noch besser erkennbar als bei der Herstellung MDI-basierter Polyurethan-Weichschaumstoffe. Der TDI-basierte Polyurethan-Weichschaum aus Beispiel 18, der das erfindungsgemäße amingestartete Polyol 1 enthielt, erreichte eine maximale Steighöhe von 250 mm innerhalb von nur ca. 40 s.

Der TDI-basierte Polyurethan-Weichschaumstoff aus Referenzbeispiel 22 schäumte auf eine Höhe von ca. 220 mm auf, kollabierte dann aber. Der TDI-basierte Polyurethan-Weichschaumstoff aus Referenzbeispiel 21 erreichte nur eine Höhe von ca.160 mm. Diesen beiden Schäume wurden als nicht verwertbare, kollabierte Schäume eingestuft.

Die Ergebnisse der Steigprofilmessungen, welche einen Rückschluss auf die katalytische Wirkung der amingestarteten Polyole zulassen, sind in der folgenden Tabelle 7 zusammengefasst.

**Tabelle 7:** Zusammenfassung der katalytischen Wirkung der amingestarteten Polyole

|  | amingestartetes Polyol | Verhalten im MDI Schaum | Verhalten im TDI Schaum |
|---|---|---|---|
| **Erfindungsgemäß** | 1 | ++ | ++ |
| **Referenz** | 2 | + (Sehr schnell, leichtes Setzen) | ++ (Sehr schnell) |
| **Referenz** | 3 | + (leichtes Setzen) | + (leichtes Setzen) |
| **Referenz** | 4 | -- (sehr schwache katalytische Aktivität) | -- (sehr schwache katalytische Aktivität) |
| **Referenz** | 5 | -- (schwache katalytische Aktivität, starkes Setzen) | -- (schwache katalytische Aktivität, Kollaps) |

Die Ergebnisse der Messungen sind in Abbildung 1 dargestellt.

Insgesamt zeigen die experimentellen Daten, dass mit den erfindungsgemäßen amingestarteten Polyolen Polyurethan-Weichschäume erhalten werden können, die im Vergleich zu herkömmlichen Katalysatoren erhebliche Vorteile im Hinblick auf die Emission von leichtflüchtigen Substanzen aufweisen, wobei gleichzeitig die mechanischen Eigenschaften innerhalb der gewünschten Wertebereiche bleiben. Des Weiteren weisen die erfindungsgemäßen amingestarteten Polyole gute katalytische Aktivitäten auf.

**Patentansprüche**

1. Verfahren zur Herstellung eines aminbasierten Polyols zur Herstellung von Polyurethan-Weichschaumstoff umfassend die folgenden Schritte

   a) Umsetzung eines Amins der allgemeinen Formel (I)

   $$R^1_2N\text{-}(CH_2)_n\text{-}NH_2 \qquad (I)$$

   wobei $R^1$ jeweils ein unterschiedlicher oder gleicher $C_1$ bis $C_{10}$ Alkylrest und n eine ganze Zahl von 1 bis 10 ist, mit einem Epoxid A,
   wobei das Epoxid A und das Amin in einem molaren Verhältnis von 10 bis 50 zu 1 eingesetzt werden, und die Umsetzung so lange erfolgt, bis mindestens 90 Gew.-% des eingesetzten Epoxids A umgesetzt sind, so dass ein Zwischenprodukt erhalten wird,

   b) Umsetzung des Zwischenprodukts mit einem Epoxid B, welches von Epoxid A verschieden ist,
   wobei Epoxid B in einer Menge eingesetzt wird, die einem molaren Verhältnis des Epoxids zu dem Amin von 8 bis 40 zu 1 entspricht, und
   die Umsetzung so lange erfolgt, bis mindestens 90 Gew.-% des eingesetzten Epoxids B umgesetzt sind, so dass das aminbasierte Polyol erhalten wird.

2. Verfahren nach Anspruch 1, **dadurch gekennzeichnet, dass** in dem Amin der allgemeinen Formel (I) $R^1$ jeweils der gleiche $C_1$ bis $C_3$ Alkylrest ist und n eine ganze Zahl von 2 bis 6 ist, wobei $R^1$ bevorzugt jeweils ein Methylrest ist.

3. Verfahren nach einem der Ansprüche 1 oder 2, **dadurch gekennzeichnet, dass** das Amin der allgemeinen Formel (I) 3-Dimethylamino-1-propylamin ist.

4. Verfahren nach einem der vorstehenden Ansprüche, **dadurch gekennzeichnet, dass** das Epoxid A Propylenoxid ist und/oder das Epoxid B Ethylenoxid ist.

5. Verfahren nach einem der vorstehenden Ansprüche, **dadurch gekennzeichnet, dass** die Umsetzung in den Schritten a) und/oder b) in Anwesenheit eines Katalysators erfolgt und/oder in den Schritten a) und/oder b) und/oder nach Beendigung von Schritt b) ein Antioxidans eingesetzt wird.

6. Verfahren nach einem der vorstehenden Ansprüche, **dadurch gekennzeichnet, dass** die Umsetzung in Schritt a) so lange erfolgt bis mindestens 95 Gew.-%, bevorzugt mindestens 98 Gew.-%, des eingesetzten Epoxids A umgesetzt sind und/oder die Umsetzung in Schritt b) so lange erfolgt bis mindestens 95 Gew.-%, bevorzugt mindestens 98 Gew.-%, des eingesetzten Epoxids B umgesetzt sind.

7. Aminbasiertes Polyol erhalten durch oder erhältlich durch ein Verfahren nach einem der Ansprüche 1 bis 6.

8. Verwendung des aminbasierten Polyols nach Anspruch 7 als einbaubarer Katalysator bei der Herstellung von Polyurethan-Weichschaumstoff, insbesondere bei der Herstellung in einem Kaltschaumverfahren.

9. Verwendung nach Anspruch 8, **dadurch gekennzeichnet, dass** Möbelpolsterungen, Textileinlagen, Matratzen, Automobilsitze, Kopfstützen, Armlehnen, Schwämme, Dachhimmel, Türseitenverkleidungen, Sitzauflagen oder Bauelemente hergestellt werden.

10. Polyurethan-Weichschaumstoff erhalten durch oder erhältlich durch Umsetzung einer Zusammensetzung enthaltend oder bestehend aus

   - einer Isocyanat-reaktiven Komponente **A1** enthaltend oder bestehend aus Verbindungen mit gegenüber Isocyanten reaktionsfähigen Wasserstoffatomen und/oder einem gefüllten Polyol;
   - einer weiteren Isocyanat-reaktiven Komponente **A2,** die von **A1** verschieden ist;
   - einer Komponente **A3** enthaltend oder bestehend aus mindestens einem Treibmittel;
   - optional einer Komponente **A4** enthaltend oder bestehend aus Hilfs- und Zusatzstoffen; sowie
   - einer Komponente **B** enthaltend oder bestehend aus mindestens einem aromatischen Polyisocyanat; bevorzugt Toluylendiisocyanat;
   - eine Komponente **C** enthaltend oder bestehend aus einem aminbasierten Polyol erhalten oder erhältlich durch ein Verfahren gemäß den Ansprüchen 1 bis 6,
   wobei die Umsetzung bei einem Isocyanat-Index von 70 bis 120 erfolgt.

11. Polyurethan-Weichschaumstoff nach Anspruch 10, **dadurch gekennzeichnet, dass** die Zusammensetzung enthält oder besteht aus

   - von 65 bis 95 Gew.-Teilen der Komponente **A1;** wobei Komponente **A1** bevorzugt 5 bis 60 Gew.-Teile, bezogen auf die Masse der Komponente **A1** und **A2,** eines gefüllten Polyols enthält,
   - von 0,1 bis 5 Gew.-Teilen der Komponente **A2;**
   - von 1 bis 4,5 Gew.-Teilen der Komponente **A3;**
   - optional von 0,1 bis 5 Gew.-Teilen der Komponente **A4;** sowie
   - von 20 bis 70 Gew.-Teilen der Komponente **B,** wobei Komponente **B** insbesondere Toluylendiisocyanat enthält oder daraus besteht
   - von 5 bis 35 Gew.-Teile der Komponente **C**
   wobei sich die Gewichtsteile der Komponenten A1 und C zu 100 addieren und die Angaben für die Gewichtsteile der Komponenten A2, A3, A4 und B auf die Summe der Komponenten A1 und C bezieht.

12. Polyurethan-Weichschaumstoff nach einem der Ansprüche 10 oder 11, **dadurch gekennzeichnet, dass** der Polyurethan-Weichschaum eine Emission von aliphatischen Aminen bei einer Messung nach VDA 278-Test von 2011, Aufheizung zur Ermittlung von VOC, von ≤ 10 mg/kg , bevorzugt ≤ 5 mg/kg, bevorzugter von ≤ 1 mg/kg, aufweist.

13. Polyurethan-Weichschaumstoff nach einem der Ansprüche 10 bis 12, **dadurch gekennzeichnet, dass** der Polyurethan-Weichschaumstoff einen Druckverformungsrest nach Feuchtwärme 50%/22h/70°C nach DIN EN ISO 1856-2008 von 5 bis 25 %, bevorzugt von 0 bis 10 % aufweist.

14. Polyurethan-Weichschaumstoff nach einem der Ansprüche 10 bis 13, **dadurch gekennzeichnet, dass** der Polyurethan-Weichschaumstoff ein Humid Aged Load Loss nach DIN EN ISO 3386-1 vom 10/2015 von -10 bis 20 % aufweist.

15. Polyurethan-Weichschaumstoff nach einem der Ansprüche 10 bis 14, **dadurch gekennzeichnet, dass** der Polyurethan-Weichschaumstoff ein Humid Aged Compression set nach DIN EN 1856 von 2008 nach Dampfautoklavierung für 3h bei 105°C von 0 bis 40% aufweist.

Abbildung 1

Abbildung 2

Steigprofil Messungen für MDI-basierte PUR-Schäume

Europäisches
Patentamt

European
Patent Office

Office européen
des brevets

**EUROPÄISCHER RECHERCHENBERICHT**

Nummer der Anmeldung

EP 19 18 3588

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 539 819 A2 (BASF AG [DE]) 5. Mai 1993 (1993-05-05) * Beispiele 1,6 * ----- | 1-7 | INV. C08G18/48 C08G18/50 C08G18/63 |
| A | JP H02 70718 A (SANYO CHEMICAL IND LTD) 9. März 1990 (1990-03-09) * Polyol B; Seite 219, rechte Spalte, letzter Absatz - Seite 220, linke Spalte, Absatz 1 * * Seite 217, rechte Spalte, Absatz 4 * ----- | 1-15 | C08G18/76 C08G65/26 C08G18/40 |
| A | WO 03/016372 A1 (DOW GLOBAL TECHNOLOGIES INC [US]; TU JOHNSON [CN] ET AL.) 27. Februar 2003 (2003-02-27) * Seite 18, Zeilen 7-9 * ----- | 1-15 | |
| A | US 2005/131192 A1 (MATSUDA TAKEHISA [JP] ET AL) 16. Juni 2005 (2005-06-16) * Absatz [0159] * ----- | 1-15 | |
| A | EP 1 650 246 A1 (BYK CHEMIE GMBH [DE]) 26. April 2006 (2006-04-26) * Beispiel 14 * ----- | 1-15 | RECHERCHIERTE SACHGEBIETE (IPC) |
| A | JP 2003 165995 A (SANYO CHEMICAL IND LTD) 10. Juni 2003 (2003-06-10) * Absatz [0031] * ----- | 1-15 | C08G C09J |

Der vorliegende Recherchenbericht wurde für alle Patentansprüche erstellt

| Recherchenort | Abschlußdatum der Recherche | Prüfer |
|---|---|---|
| München | 13. Januar 2020 | Lanz, Sandra |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 19 18 3588

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-01-2020

| Im Recherchenbericht angeführtes Patentdokument | Datum der Veröffentlichung | Mitglied(er) der Patentfamilie | Datum der Veröffentlichung |
|---|---|---|---|
| EP 0539819 A2 | 05-05-1993 | AT 167206 T | 15-06-1998 |
| | | CA 2080516 A1 | 30-04-1993 |
| | | DE 4135588 A1 | 06-05-1993 |
| | | DE 59209369 D1 | 16-07-1998 |
| | | DK 0539819 T3 | 12-10-1998 |
| | | EP 0539819 A2 | 05-05-1993 |
| | | ES 2117023 T3 | 01-08-1998 |
| | | JP H05214091 A | 24-08-1993 |
| | | KR 930008004 A | 20-05-1993 |
| | | US 5476969 A | 19-12-1995 |
| JP H0270718 A | 09-03-1990 | JP H0270718 A | 09-03-1990 |
| | | JP H0525888 B2 | 14-04-1993 |
| WO 03016372 A1 | 27-02-2003 | AT 497983 T | 15-02-2011 |
| | | BR 0211861 A | 21-09-2004 |
| | | CA 2455503 A1 | 27-02-2003 |
| | | CN 1541234 A | 27-10-2004 |
| | | EP 1419189 A1 | 19-05-2004 |
| | | ES 2357642 T3 | 28-04-2011 |
| | | HU 0401049 A2 | 30-08-2004 |
| | | JP 4220384 B2 | 04-02-2009 |
| | | JP 2005500416 A | 06-01-2005 |
| | | KR 20040030084 A | 08-04-2004 |
| | | MX PA04001427 A | 03-06-2004 |
| | | TW 592813 B | 21-06-2004 |
| | | US 2004242718 A1 | 02-12-2004 |
| | | WO 03016372 A1 | 27-02-2003 |
| | | ZA 200400647 B | 30-03-2005 |
| US 2005131192 A1 | 16-06-2005 | KEINE | |
| EP 1650246 A1 | 26-04-2006 | CA 2524012 A1 | 20-04-2006 |
| | | CN 1763120 A | 26-04-2006 |
| | | DE 102004050955 A1 | 27-04-2006 |
| | | EP 1650246 A1 | 26-04-2006 |
| | | JP 2006124699 A | 18-05-2006 |
| | | KR 20060049106 A | 18-05-2006 |
| | | TW 200619256 A | 16-06-2006 |
| | | US 2006089426 A1 | 27-04-2006 |
| JP 2003165995 A | 10-06-2003 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015153316 A
- EP 1878492 B1
- EP 1977825 B1
- EP 1977826 B1
- EP 2104696 A
- EP 2046861 A
- EP 0176013 A
- DE 2558523 A

- DE 1694142 A
- DE 1694215 A
- DE 1720768 A
- US 2764565 A
- US 3178490 A
- US 3182104 A
- DE OS2121670 A
- DE OS2307589 A

**In der Beschreibung aufgeführte Nicht-Patentliteratur**

- Polyurethane. Kunststoffhandbuch. Hanser Verlag, 1993, vol. 7, 57-75
- Polyurethane. Kunststoffhandbuch. vol. 7
- *Reaction Polymers*
- Kunststoff-Handbuch. Carl-Hanser-Verlag, 1966, vol. VII, 96-102

- Kunststoff-Handbuch. Carl-Hanser-Verlag, 1966, vol. VII, 103-113
- Kunststoff-Handbuch. Carl-Hanser-Verlag, 1966, vol. VII, 108, , 453, , 507
- Polyurethane. Kunststoff-Handbuch. Carl Hanser Verlag, 1966, vol. VII